(19) Europäisches Patentamt
European Patent Office
Office européen des brevets

(11) **EP 3 641 544 B1**

(12) **EUROPEAN PATENT SPECIFICATION**

(45) Date of publication and mention of the grant of the patent:
**06.08.2025 Bulletin 2025/32**

(21) Application number: **18731134.5**

(22) Date of filing: **21.06.2018**

(51) International Patent Classification (IPC):
*A01N 43/56* (2006.01) *A01N 43/58* (2006.01)
*A01N 43/80* (2006.01) *A01N 43/34* (2006.01)
*A01P 5/00* (2006.01) *A01P 7/04* (2006.01)

(52) Cooperative Patent Classification (CPC):
(C-Sets available)
**A01N 43/80; A01N 43/58** (Cont.)

(86) International application number:
**PCT/EP2018/066624**

(87) International publication number:
**WO 2018/234478 (27.12.2018 Gazette 2018/52)**

# (54) PESTICIDAL MIXTURES COMPRISING A PYRAZOLE COMPOUND

PESTIZIDMISCHUNGEN MIT EINER PYRAZOLVERBINDUNG

MÉLANGES DE PESTICIDES CONTENANT UN COMPOSÉ PYRAZOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2017 EP 17177575**
**28.06.2017 EP 17178272**
**04.12.2017 EP 17205186**

(43) Date of publication of application:
**29.04.2020 Bulletin 2020/18**

(60) Divisional application:
**25180178.3**

(73) Proprietor: **BASF SE**
**67056 Ludwigshafen am Rhein (DE)**

(72) Inventors:
- **REINHARD, Robert**
**67117 Limburgerhof (DE)**
- **SOERGEL, Sebastian**
**67117 Limburgerhof (DE)**
- **LANGEWALD, Juergen**
**67117 Limburgerhof (DE)**

(74) Representative: **BASF IP Association**
**BASF SE**
**GBI - Z078**
**67056 Ludwigshafen (DE)**

(56) References cited:
**WO-A1-2011/067272 WO-A1-2013/050302**
**WO-A1-2013/189801 WO-A1-2015/189080**
**WO-A1-2016/162371 WO-A1-2017/055386**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/56, A01N 43/80;**
**A01N 43/58, A01N 43/80**

## Description

The present invention relates to pesticidal mixtures comprising as active components:

1) a compound A, which is 1-(1,2-dimethylpropyl)-N-ethyl-5-methyl-N-pyridazin-4-yl-pyrazole-4-carboxamide of formula I-1:

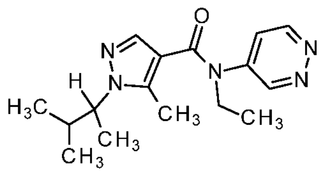

I-1

and

2) compound B, which is 4-[(5S)-5-(3,5-dichloro-4-fluoro-phenyl)-5-(trifluoromethyl)-4H-isoxazol-3-yl]-N-[(4R)-2-ethyl-3-oxo-isoxazolidin-4-yl]-2-methyl-benzamide;

B3)

wherein component 1) and component 2) are present in a weight ratio of from 1000:1 to 1:1000.

One typical problem arising in the field of pest control lies in the need to reduce the dosage rates of the active ingredient in order to reduce or avoid unfavorable environmental or toxicological effects whilst still allowing effective pest control. Another problem encountered concerns the need to have available pest control agents which are effective against a broad spectrum of pests.

Another difficulty in relation to the use of pesticides is that the repeated and exclusive application of an individual pesticidal compound leads in many cases to a rapid selection of pests which have developed natural or adapted resistance against the active compound in question. Therefore, there is a need for pest control agents that help prevent or overcome resistance.

WO 2012/143317 and WO2015/055497 describe N-pyridazinyl carboxamide compounds derived from pyrazole carboxylic acids. These compounds are mentioned to be useful for combating invertebrate pests.

WO 2015/189080 relates to pesticidal mixtures comprising an active anthranilamide compound. The invention relates further to methods for controlling and combating pests, such as insects, acarids or nematodes.

WO 2016/162371 discloses the method for controlling pests with an insectidcidal carboxamide compound or a mixture therof in cultivated plants which may possibly genetically modified by mutagenesis or genetic engenieering.

WO 2017/055386 relates to imino compounds with 2-chloropyramidin-5-yl substitutent as pest control agents.

WO 2013/050302 discloses isoxazoline derivates with insecticidal properties and their synthesis.

WO 2011/067272 relates to insecticidal compounds derived from isoxazoline. These compounds are described in terms of their synthesis, formulation and their effectiveness for pest control.

WO 2013/189801 describes a pyrazole compound and the derivates along with their synthesis. These compounds are disclosed for their effectiveness in controlling pests.

It is therefore an object of the present invention to provide pesticidal mixtures which solve at least one of the discussed problems as reducing the dosage rate, enhancing the spectrum of activity or combining knock-down activity with prolonged control or as to resistance management.

It has been found that at least one of these objectives is achieved by the combination of active compounds defined in the outset. Moreover, it has also been found that simultaneous, that is joint or separate, application of compound A and compound B or successive application of active compound A and active compound B allows enhanced control of pests compared to the control rates that are possible with the individual compounds.

Moreover, the present invention relates to

- a composition comprising the pesticidal mixture as defined herein and at least one inert liquid and/or solid acceptable carrier;
- an agricultural composition comprising the pesticidal mixture as defined herein and at least one inert liquid and/or solid acceptable carrier;
- a non-therapeutic method for controlling or combating invertebrate pests, comprising contacting said pest or its food supply, habitat, breeding grounds with a pesticidally effective amount of the pesticidal mixture as defined herein;
- a method of protecting plants from attack or infestation by invertebrate pests, contacting a plant, a plant propagation material or soil or water in which the plant is growing, with a pesticidally effective amount of the pesticidal mixture as defined herein;

- a plant propagation material comprising the pesticidal mixture as defined herein in an amount of from 0.1 g to 10 kg per 100 kg of plant propagation material;
- a method for protection of plant propagation material comprising contacting the plant propagation material with the pesticidal mixture as defined herein in an amount of from 0.1 g to 10 kg per 100 kg of plant propagation material;
- the use of the pesticidal mixture as defined herein for protecting growing plants or plant propagation material from attack or infestation by invertebrate pests;
- a method for controlling phytopathogenic harmful fungi, wherein the fungi, their habitat or the plants to be protected against fungal attack, the soil or seed are treated with an effective amount of the pesticidal mixture comprising pyrazole compound A as defined herein and compound B as defined herein;
- a method for protecting plants from phytopathogenic harmful fungi, wherein the fungi, their habitat or the plants to be protected against fungal attack, the soil or seed are treated with an effective amount of the pesticidal mixture comprising pyrazole compound A as defined herein and compound B as defined herein;
- a method for protecting animals against infestation or infection by parasites which comprises administering to the animals a parasitically effective amount of the pesticidal mixture as defined herein;
- composition for use in a method for treating animals infested or infected by parasites which comprises administering to the animals a parasitically effective amount of the pesticidal mixture as defined herein to the animal in need thereof; and
- pesticidal mixture as defined herein for use in a therapeutic method for combating parasites in and on animals.

The mixture according to the invention may be a physical mixture of the compound A and the compound B. Accordingly, the invention also provides a mixture comprising compound A and compound B. However, the composition may also be the combination of compound A with compound B, it not being required for compounds A and B to be present together in the same formulation.

An example of a composition according to the invention or to be used according to the invention in which the compound A and the compound B are not present together in the same formulation is a combipack. In a combipack, two or more components of a combipack are packaged separately, i.e., not jointly pre-formulated. As such, combipacks include one or more separate containers such as vials, cans, bottles, pouches, bags or canisters, each container containing a separate component for an agrochemical composition. One example is a two-component combipack. Accordingly the present invention also relates to a two-component combipack, comprising a first component which in turn comprises compound A, a liquid or solid carrier and, if appropriate, at least one surfactant and/or at least one customary auxiliary, and a second component which in turn comprises compound B, a liquid or solid carrier and, if appropriate, at least one surfactant and/or at least one customary auxiliary. More details, e.g. as to suitable liquid and solid carriers, surfactants and customary auxiliaries are described below.

The "combined" use of pyrazole compound A "in combination with" compound B on the one hand can be understood as using a physical mixture of pyrazole compound A and compound B. On the other hand, the combined use may also consist in using the pyrazole compound A and compound B separately, but within a sufficiently short time of one another so that the desired effect can take place. More detailed illustrations of the combined use can be found in the specifications below.

The term "invertebrate pest" (also referred to as animal pests) as used herein encompasses animal populations, such as insects, arachnids and nematodes, which may attack plants, thereby causing substantial damage to the plants attacked, as well as ectoparasites which may infest animals, in particular warm blooded animals such as e.g. mammals or birds, or other higher animals such as reptiles, amphibians or fish, thereby causing substantial damage to the animals infested.

The term "compound(s) according to the invention", or "compound(s) of formula I-1" or "pyrazole compound(s) A" comprises the compound(s) as defined herein as well as a stereoisomer, salt, tautomer or N-oxide thereof. The term "compound(s) of the present invention" is to be understood as equivalent to the term "compound(s) according to the invention", therefore also comprising a stereoisomer, salt, tautomer or N-oxide thereof.

The term "stereoisomers" encompasses both optical isomers, such as enantiomers or diastereomers, the latter existing due to more than one centre of chirality in the molecule, as well as geometrical isomers (cis/trans isomers).

The compound of formula I-1 has a centre of chirality, and may be present as mixture of enantiomers. The invention provides both the pure enantiomers or their mixtures and the use according to the invention of the pure enantiomers of the compound I-1 or its mixtures.

The term "N-oxide" relates to a form of compound I-1 in which at least one nitrogen atom is present in oxidized form (as NO).

The active compounds may be amorphous or may exist in one or more different crystalline states (polymorphs) which may have a different macroscopic properties such as stability or show different biological properties such as activities. The present invention includes both amorphous and crystalline compound of the formula I-1, mixtures of different crystalline states of the respective compound I-1, as well as amorphous or crystalline salts thereof.

Salts of the compound of the formula I-1 are preferably agriculturally and veterinarily acceptable salts. They can be formed in a customary method, e.g. by reacting the compound with an acid of the anion in question if the compound of formula I-1 has a basic functionality or by reacting an acidic compound of formula I-1 with a suitable base.

Suitable agriculturally acceptable salts are especially the salts of those cations or the acid ad-dition salts of those acids whose cations and anions, respectively, do not have any adverse effect on the action of the compounds according to the present invention. Suitable cations are in particular the ions of the alkali metals, preferably lithium, sodium and potassium, of the alkaline earth metals, preferably calcium, magnesium and barium, and of the transition metals, preferably manganese, copper, zinc and iron, and also ammonium ($NH_4^+$) and substituted ammonium in which one to four of the hydrogen atoms are replaced by $C_1$-$C_4$-alkyl, $C_1$-$C_4$-hydroxyalkyl, $C_1$-$C_4$-alkoxy, $C_1$-$C_4$-alkoxy-$C_1$-$C_4$-alkyl, hydroxy-$C_1$-$C_4$-alkoxy-$C_1$-$C_4$-alkyl, phenyl or benzyl. Examples of substituted ammonium ions comprise methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)ethylammonium, bis(2-hydroxyethyl)ammonium, benzyltrimethylammonium and benzl-triethylammonium, furthermore phosphonium ions, sulfonium ions, preferably tri($C_1$-$C_4$-alkyl)sulfonium, and sulfoxo-nium ions, preferably tri($C_1$-$C_4$-alkyl)sulfoxonium.

Anions of useful acid addition salts are primarily chloride, bromide, fluoride, hydrogen sulfate, sulfate, dihydrogen phosphate, hydrogen phosphate, phosphate, nitrate, hydrogen carbonate, carbonate, hexafluorosilicate, hexafluorophosphate, benzoate, and the anions of $C_1$-$C_4$-alkanoic acids, preferably formate, acetate, propionate and butyrate. They can be formed by reacting a compound of formula I-1 with an acid of the corresponding anion, preferably of hydrochloric acid, hydrobromic acid, sulfuric acid, phosphoric acid or nitric acid.

The organic moieties mentioned in the above definitions of the variables are - like the term halogen - collective terms for individual listings of the individual group members. The prefix $C_n$-$C_m$ indicates in each case the possible number of carbon atoms in the group.

The commercially available compound B may be found in The Pesticide Manual, 17th Edition, British Crop Protection Council (2015) among other publications, and its online database https://www.bcpc.org/product/bcpc-online-pesticide-manual-latest-version. CompoundBand its pesticidal action are known from WO 2013/050302.

We have found that simultaneous, that is joint or separate, application of compound I-1 and compound B or successive application of the compound of formula I-1 and compound B allows better control of animal pests than is possible with the individual compounds alone (synergistic mixtures). By simultaneous, that is joint or separate, application of the compound of formula I-1 with the active compound B, the fungicidal and/or insecticidal activity, resp., is increased in a super-additive manner.

The compound of the formula I-1 can be present in different crystal modifications, which may differ in biological activity.

Pesticidal mixture A comprises as active components:

1) a compound of formula I-1, and
2) an isoxazoline B, which is 4-[5-(3,5-dichlorophenyl)-5-(trifluoromethyl)-4H-isoxazol-3-yl]-N-[(4R)-2-ethyl-3-oxo-isoxazolidin-4-yl]-2-methyl-benzamide,

wherein component 1) and component 2) are present in a total weight ratio of from 1000:1 to 1:1000;

Binary mixtures of a compound of formula I-1 and a compound B are one preferred embodiment of the invention.

The invention relates to mixtures of the compound A and the compound B, particularly containing additionally at least a further insecticide, which is not a compound of formula II

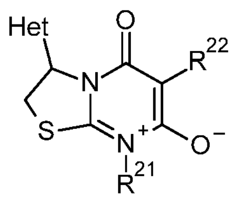

(II)

wherein

- $R^{21}$ is $C_1$-$C_4$-alkyl, $C_3$-$C_6$-cycloalkyl, $C_2$-$C_4$-alkenyl or benzyl, which groups may be partially or fully substituted with halogen or $C_1$-$C_4$-alkyl;
- $R^{22}$ is a five-or six membered carbo- or heterocyclic ring, which ring may be unsubstituted, partially or fully substituted with $R^{2a}$;
- Het is selected from D-1, D-2 and D-3

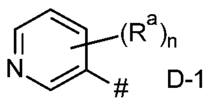 D-1 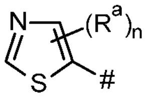 D-2 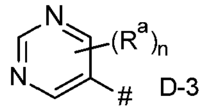 D-3

wherein

$R^a$ is halogen, $C_1$-$C_4$-haloalkyl, $C_1C_4$-alkoxy, or $C_1$-$C_4$-alkylthio, or phenyl,
n is 0, 1, or 2, and
\# denotes the bond in formula II;

$R^{2a}$ is halogen, $C_1$-$C_6$-haloalkyl, $C_1$-$C_6$-haloalkoxy, $OR^c$, $C(=O)OR^c$, $C(=O)NR^bR^c$, phenyl, or pyridyl, which may be substituted with halogen, $C_1$-$C_6$-haloalkyl or $C_1$-$C_6$-haloalkoxy;
$R^b$ is each independently H, $C_1$-$C_6$-alkyl, $C_1$-$C_6$-haloalkyl, $C_1$-$C_6$-alkoxy, $C_1$-$C_6$-haloalkoxy;
$R^c$ is each independently hydrogen, $C_1$-$C_4$-alkyl, $C_1$-$C_4$-haloalkyl, $C_1$-$C_6$ cycloalkyl;

wherein two geminally bound groups $R^bR^b$, $R^cR^b$ or $R^cR^c$ together with the atom to which they are bound, may form a 3-, 4-, 5-, 6-, or 7- membered saturated, partially unsaturated, or aromatic carbo- or heterocyclic ring;
or a stereoisomer, tautomer, salt, or N-oxide thereof.

Compounds of formula II and its preparation are described in EP 17177575.2.

A further embodiment of the invention relates to the mixture A, containing additionally at least a fungicide C from the groups F1 to F11.

F1) Respiration inhibitors

- Inhibitors of complex III at $Q_o$ site (e. g. strobilurins): azoxystrobin (F1.1.1), coumethoxy-strobin (F1.1.2), coumoxystrobin (F1.1.3), dimoxystrobin (F1.1.4), enestroburin (F1.1.5), fen-aminstrobin (F1.1.6), fenoxystrobin/flufenoxystrobin (F1.1.7), fluoxastrobin (F1.1.8), kresoxim-methyl (F1.1.9), mandestrobin (F1.1.10), metominostrobin (F1.1.11), orysastrobin (F1.1.12), picoxystrobin (F1.1.13), pyraclostrobin (F1.1.14), pyrametostrobin (F1.1.15), pyraoxystrobin (F1.1.16), trifloxystrobin (F1.1.17), 2-(2-(3-(2,6-dichlorophenyl)-1-methyl-allylideneaminooxymethyl)-phenyl)-2-methoxyimino-N-methyl-acetamide (F1.1.18), pyribencarb (F1.1.19), triclo-pyricarb/chlorodincarb (F1.1.20), famoxadone (F1.1.21), fenamidone (F1.1.21), methyl-N-[2-[(1,4-dimethyl-5-phenyl-pyrazol-3-yl) oxylmethyl]phenyl]-N-methoxy-carbamate (F1.1.22), 1-[3-chloro-2-[[1-(4-chlorophenyl)-1H-pyrazol-3-yl]oxymethyl]phenyl]-4-methyl-tetrazol-5-one (F1.1.23), 1-[3-bromo-2-[[1-(4-chlorophenyl)pyrazol-3-yl]oxymethyl]phenyl]-4-methyl-tetrazol-5-one (F1.1.24), 1-[2-[[1-(4-chlorophenyl)pyrazol-3-yl]oxymethyl]-3-methyl-phenyl]-4-methyl-tetrazol-5-one (F1.1.25), 1-[2-[[1-(4-chlorophenyl)pyrazol-3-yl]oxymethyl]-3-fluoro-phenyl]-4-methyl-tetrazol-5-one (F1.1.26), 1-[2-[[1-(2,4-dichlorophenyl)pyrazol-3-yl]oxymethyl]-3-fluoro-phenyl]-4-methyl-tetrazol-5-one (F1.1.27), 1-[2-[[4-(4-chlorophenyl)thiazol-2-yl]oxymethyl]-3-methyl-phenyl]-4-methyl-tetrazol-5-one (A.1.28), 1-[3-chloro-2-[[4-(p-tolyl)thiazol-2-yl]oxymethyl]phenyl]-4-methyl-tetrazol-5-one (F1.1.29), 1-[3-cyclopropyl-2-[[2-methyl-4-(1-methylpyra-zol-3-yl)phenoxy]methyl]phenyl]-4-methyl-tetrazol-5-one (F1.1.30), 1-[3-(difluoromethoxy)-2-[[2-methyl-4-(1-methylpyrazol-3-yl)phenoxy]methyl]phenyl]-4-methyl-tetrazol-5-one (F1.1.31), 1-methyl-4-[3-methyl-2-[[2-methyl-4-(1-methylpyrazol-3-yl)phenoxy]methyl]phenyl]tetrazol-5-one (F1.1.32), 1-methyl-4-[3-methyl-2-[[1-[3-(trifluoromethyl)phenyl]-ethylideneamino]oxymethyl]phenyl]tetrazol-5-one (F1.1.33), (*Z,2E*)-5-[1-(2,4-dichlorophenyl)pyrazol-3-yl]-oxy-2-meth-oxyimino-*N*,3-dimethyl-pent-3-enamide (F1.1.34), (*Z*;2*E*)-5-[1-(4-chlorophenyl)pyrazol-3-yl]oxy-2-methoxyimino-*N*,3-dimethyl-pent-3-enamide (F1.1.35), (*Z*2*E*)-5-[1-(4-chloro-2-fluoro-phenyl)pyrazol-3-yl]oxy-2-methoxyimino-*N*,3-dimethyl-pent-3-enamide (F1.1.36),
- inhibitors of complex III at $Q_i$ site: cyazofamid (F1.2.1), amisulbrom (F1.2.2), [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate (F1.2.3), [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate (F1.2.4), [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate (F1.2.5), [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate (F1.2.6); (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate (F1.2.7), (3S,6S,7R,8R)-8-benzyl-3-[3-[(isobutyryloxy)methoxy]-4-methoxypicolinamido]-6-methyl-4,9-dioxo-1,5-dioxonan-7-yl isobutyrate (F1.2.8);
- inhibitors of complex II (e. g. carboxamides): benodanil (F1.3.1), benzovindiflupyr (F1.3.2), bixafen (F1.3.3), boscalid

(F1.3.4), carboxin (F1.3.5), fenfuram (F1.3.6), fluopyram (F1.3.7), flutolanil (F1.3.8), fluxapyroxad (F1.3.9), furametpyr (F1.3.10), isofetamid (F1.3.11), isopyra-zam (F1.3.12), mepronil (F1.3.13), oxycarboxin (F1.3.14), penflufen (F1.3.14), penthiopyrad (F1.3.15), sedaxane (F1.3.16), tecloftalam (F1.3.17), thifluzamide (F1.3.18), N-(4'-trifluorome-thylthiobiphenyl-2-yl)-3-difluoromethyl-1-methyl-1H-pyrazole-4-carboxamide (F1.3.19), N-(2-(1,3,3-trimethylbutyl)-phenyl)-1,3-dimethyl-5-fluoro-1H-pyrazole-4-carboxamide (F1.3.20), 3-(difluoromethyl)-1-methyl-N-(1,1,3-trimethylindan-4-yl)pyrazole-4-carboxamide (F1.3.21), 3-(trifluoromethyl)-1-methyl-N-(1,1,3-trimethylindan-4-yl) pyrazole-4-carboxamide (F1.3.22), 1,3-dimethyl-N-(1,1,3-trimethylindan-4-yl)pyrazole-4-carboxamide (F1.3.23), 3-(trifluoromethyl)-1,5-dimethyl-N-(1,1,3-trimethylindan-4-yl)pyrazole-4-carboxamide (F1.3.24), 1,3,5-trimethyl-N-(1,1,3-trimethylindan-4-yl)pyrazole-4-carboxamide (F1.3.25), N-(7-fluoro-1,1,3-trimethyl-indan-4-yl)-1,3-dimethyl-pyrazole-4-carboxamide (F1.3.26), N-[2-(2,4-dichlorophenyl)-2-methoxy-1-methyl-ethyl]-3-(difluoromethyl)-1-methyl-pyrazole-4-carboxamide (F1.3.27);

- other respiration inhibitors (e. g. complex I, uncouplers): diflumetorim (F1.4.1), (5,8-difluo-roquinazolin-4-yl)-{2-[2-fluoro-4-(4-trifluoromethylpyridin-2-yloxy)-phenyl]-ethyl}-amine (F1.4.2); nitrophenyl derivates: binapacryl (F1.4.3), dinobuton (F1.4.4), dinocap (F1.4.5), fluazinam (F1.4.6); ferimzone (F1.4.7); organometal compounds: fentin salts, such as fentin-acetate (F1.4.8), fentin chloride (F1.4.9) or fentin hydroxide (F1.4.10); ametoctradin (F1.4.11); and silthiofam (F1.4.12);

F2) Sterol biosynthesis inhibitors (SBI fungicides)

- C14 demethylase inhibitors (DMI fungicides): triazoles: azaconazole (F2.1.1), bitertanol (F2.1.2), bromuconazole (F2.1.3), cyproconazole (F2.1.4), difenoconazole (F2.1.5), diniconazole (F2.1.6), diniconazole-M (F2.1.7), epoxiconazole (F2.1.8), fenbuconazole (F2.1.9), flu-quinconazole (F2.1.10), flusilazole (F2.1.11), flutriafol (F2.1.12), hexaconazole (F2.1.13), imibenconazole (F2.1.14), ipconazole (F2.1.15), metconazole (F2.1.17), myclobutanil (F2.1.18), oxpoconazole (F2.1.19), paclobutrazole (F2.1.20), penconazole (F2.1.21), propiconazole (F2.1.22), prothioconazole (F2.1.23), simeconazole (F2.1.24), tebuconazole (F2.1.25), tetraconazole (F2.1.26), triadimefon (F2.1.27), triadimenol (F2.1.28), triticonazole (F2.1.29), uniconazole (F2.1.30), 1-[*rel*(2*S*;3*R*)-3-(2-chlorophenyl)-2-(2,4-difluorophenyl)-oxiranylmethyl]-5-thiocyanato-1H-[1,2,4]triazolo (F2.1.31), 2-[*rel*-(2*S*;3*R*)-3-(2-chlorophenyl)-2-(2,4-difluorophenyl)-oxiranylmethyl]-2H-[1,2,4]triazole-3-thiol (B.1.32); imidazoles: imazalil (F2.1.42), pefurazoate (F2.1.43), prochloraz (F2.1.44), triflumizol (F2.1.45); pyrimidines, pyridines and piperazines: fenarimol (F2.1.46), nuarimol (F2.1.47), pyrifenox (F2.1.48), triforine (F2.1.49), [3-(4-chloro-2-fluoro-phenyl)-5-(2,4-difluorophenyl)isoxazol-4-yl]-(3-pyridyl)methanol (F2.1.50);
- Delta14-reductase inhibitors: aldimorph (F2.2.1), dodemorph (F2.2.2), dodemorph-acetate (F2.2.3), fenpropimorph (F2.2.4), tridemorph (F2.2.5), fenpropidin (F2.2.6), piperalin (F2.2.7), spiroxamine (F2.2.8);
- Inhibitors of 3-keto reductase: fenhexamid (F2.3.1);

F3) Nucleic acid synthesis inhibitors

- phenylamides or acyl amino acid fungicides: benalaxyl (F3.1.1), benalaxyl-M (F3.1.2), kiralaxyl (F3.1.3), metalaxyl (F3.1.4), metalaxyl-M (mefenoxam, F3.1.5), ofurace (F3.1.6), oxadixyl (F3.1.7);
- others: hymexazole (F3.2.1), octhilinone (F3.2.2), oxolinic acid (F3.2.3), bupirimate (F3.2.4), 5-fluorocytosine (F3.2.5), 5-fluoro-2-(p-tolylmethoxy)pyrimidin-4-amine (F3.2.6), 5-fluoro-2-(4-fluorophenylmethoxy)pyrimidin-4-amine (F3.2.7);

F4) Inhibitors of cell division and cytoskeleton

- tubulin inhibitors, such as benzimidazoles, thiophanates: benomyl (F4.1.1), carbendazim (F4.1.2), fuberidazole (F4.1.3), thiabendazole (F4.1.4), thiophanate-methyl (F4.1.5); triazolopyrimidines: 5-chloro-7-(4-methylpiperidin-1-yl)-6-(2,4,6-trifluorophenyl)-[1,2,4]triazolo[1,5-a]pyrimidine (F4.1.6);
- other cell division inhibitors: diethofencarb (F4.2.1), ethaboxam (F4.2.2), pencycuron (F4.2.3), fluopicolide (F4.2.4), zoxamide (F4.2.5), metrafenone (F4.2.6), pyriofenone (F4.2.7);

F5) Inhibitors of amino acid and protein synthesis

- methionine synthesis inhibitors (anilino-pyrimidines): cyprodinil (F5.1.1), mepanipyrim (F5.1.2), pyrimethanil (F5.1.3);
- protein synthesis inhibitors: blasticidin-S (F5.2.1), kasugamycin (F5.2.2), kasugamycin hydrochloride-hydrate (F5.2.3), mildiomycin (F5.2.4), streptomycin (F5.2.5), oxytetracyclin (F5.2.6), polyoxine (F5.2.7), validamycin A (F5.2.8);

F6) Signal transduction inhibitors

- MAP / histidine kinase inhibitors: fluoroimid (F6.1.1), iprodione (F6.1.2), procymidone (F6.1.3), vinclozolin (F6.1.4), fenpiclonil (F6.1.5), fludioxonil (F6.1.6);
- G protein inhibitors: quinoxyfen (F.2.1);

F7) Lipid and membrane synthesis inhibitors

- Phospholipid biosynthesis inhibitors: edifenphos (F7.1.1), iprobenfos (F7.1.2), pyrazophos (F7.1.3), isoprothiolane (F7.1.4);
- lipid peroxidation: dicloran (F7.2.1), quintozene (F7.2.2), tecnazene (F7.2.3), tolclofos-methyl (F7.2.4), biphenyl (F7.2.5), chloroneb (F7.2.6), etridiazole (F7.2.7);
- phospholipid biosynthesis and cell wall deposition: dimethomorph (F7.3.1), flumorph (F7.3.2), mandipropamid (F7.3.3), pyrimorph (F7.3.4), benthiavalicarb (F7.3.5), iprovalicarb (F7.3.6), valifenalate (F7.3.7) and N-(1-(1-(4-cyano-phenyl)ethanesulfonyl)-but-2-yl) carbamic acid-(4-fluorophenyl) ester (F7.3.8);
- compounds affecting cell membrane permeability and fatty acides: propamocarb (F7.4.1);
- fatty acid amide hydrolase inhibitors: oxathiapiprolin (F7.5.1), 2-{3-[2-(1-{[3,5-bis(difluoromethyl-1H-pyrazol-1-yl] acetyl}piperidin-4-yl)-1,3-thiazol-4-yl]-4,5-dihydro-1,2-oxazol-5-yl}phenyl methanesulfonate (F7.5.2), 2-{3-[2-(1-{[3,5-bis(difluoromethyl)-1H-pyrazol-1-yl]acetyl}piperidin-4-yl) 1,3-thiazol-4-yl]-4,5-dihydro-1,2-oxazol-5-yl}-3-chlorophenyl methanesulfonate (F7.5.3);

F8) Inhibitors with Multi Site Action

- inorganic active substances: Bordeaux mixture (F8.1.1), copper acetate (F8.1.2), copper hydroxide (F8.1.3), copper oxychloride (F8.1.4), basic copper sulfate (F8.1.5), sulfur (F8.1.6);
- thio- and dithiocarbamates: ferbam (F8.2.1), mancozeb (F8.2.2), maneb (F8.2.3), metam (F8.2.4), metiram (F8.2.5), propineb (F8.2.6), thiram (F8.2.7), zineb (F8.2.8), ziram (F8.2.9);
- organochlorine compounds (e. g. phthalimides, sulfamides, chloronitriles): anilazine (F8.3.1), chlorothalonil (F8.3.2), captafol (F8.3.3), captan (F8.3.4), folpet (F8.3.5), dichlofluanid (F8.3.6), dichlorophen (F8.3.7), hexachlorobenzene (F8.3.8), pentachlorphenole (F8.3.9) and its salts, phthalide (F8.3.10), tolylfluanid (F8.3.11), N-(4-chloro-2-nitro-phenyl)-N-ethyl-4-methyl-benzenesulfonamide (F8.3.12);
- guanidines and others: guanidine (F8.4.1), dodine (F8.4.2), dodine free base (F8.4.3), guazatine (F8.4.4), guazatine-acetate (F8.4.5), iminoctadine (F8.4.6), iminoctadine-triacetate (F8.4.7), iminoctadine-tris(albesilate) (F8.4.8), dithianon (F8.4.9), 2,6-dimethyl-1H,5H-[1,4]di-thiino[2,3-c:5,6-c']dipyrrole-1,3,5,7(2H,6H)-tetraone (F8.4.10);

F9) Cell wall synthesis inhibitors

- inhibitors of glucan synthesis: validamycin (F9.1.1), polyoxin B (F9.1.2);
- melanin synthesis inhibitors: pyroquilon (F9.2.1), tricyclazole (F9.2.2), carpropamid (F9.2.3), dicyclomet (F9.2.4), fenoxanil (F9.2.5);

F10) Plant defence inducers

- acibenzolar-S-methyl (F10.1.1), probenazole (F10.1.2), isotianil (F10.1.3), tiadinil (F10.1.4), prohexadione-calcium (F10.1.5); phosphonates: fosetyl (F10.1.6), fosetyl-aluminum (F10.1.7), phosphorous acid and its salts (F10.1.8), potassium or sodium bicarbonate (F10.1.9);

F11) Unknown mode of action

- bronopol (F11.1.1), chinomethionat (F11.1.2), cyflufenamid (F11.1.3), cymoxanil (F11.1.4), dazomet (F11.1.5), debacarb (F11.1.6), diclomezine (F11.1.7), difenzoquat (F11.1.8), difenzoquat-methylsulfate (F11.1.9), diphenylamin (F11.1.10), fenpyrazamine (F11.1.11), flumetover (F11.1.12), flusulfamide (F11.1.13), flutianil (F11.1.14), methasulfocarb (F11.1.15), nitrapyrin (F11.1.16), nitrothal-isopropyl (F11.1.18), oxathiapiprolin (F11.1.19), tolprocarb (F11.1.20), oxin-copper (F11.1.21), proquinazid (F11.1.22), tebufloquin (F11.1.23), tecloftalam (F11.1.24), triazoxide (F11.1.25), 2-butoxy-6-iodo-3-propylchromen-4-one (F11.1.26), 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone (F11.1.27), 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone (F11.1.28), 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone (F11.1.29), N-(cyclopropylmethoxyimino-(6-difluoro-methoxy-2,3-difluoro-phenyl)-methyl)-2-phenyl acetamide (F11.1.30), N'-(4-(4-chloro-3-trifluoromethyl-phenoxy)-2,5-dimethyl-phenyl)-N-ethyl-N-methyl formamidine (F11.1.31), N'-(4-(4-fluoro-3-trifluoromethyl-phenoxy)-2,5-dimethyl-phenyl)-N-ethyl-N-methyl formamidine (F11.1.32), N'-(2-methyl-5-trifluoromethyl-4-(3-trimethylsilanyl-propoxy)-phenyl)-N-ethyl-N-methyl formamidine (F11.1.33), N'-(5-difluoromethyl-2-methyl-4-(3-trimethylsilanyl-propoxy)-phenyl)-N-ethyl-N-methyl formamidine (F11.1.34), methoxy-acetic acid 6-tert-butyl-8-fluoro-2,3-dimethyl-quinolin-4-yl ester (F11.1.35), 3-[5-(4-methylphenyl)-2,3-dimethyl-isoxazolidin-3-yl]-pyridine (F11.1.36), 3-[5-(4-chloro-phenyl)-2,3-dimethyl-isoxazolidin-3-yl]-pyridine (pyrisoxazole) (F11.1.37), N-(6-methoxy-pyridin-3-yl) cyclopropanecarboxylic acid amide (F11.1.38), 5-chloro-1-(4,6-dimethoxy-pyrimidin-2-yl)-2-methyl-1H-benzoimidazole (F11.1.39), 2-(4-chlorophenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate (F11.1.40), picarbutrazox (F11.1.41), pentyl N-[6-[[(Z)-[(1-methyltetrazol-5-yl)-phenyl-methylene]amino]oxymethyl]-2-pyridyl]carbamate (F11.1.42), 2-[2-[(7,8-difluoro-2-methyl-3-quinolyl)oxy]-6-fluoro-phenyl]propan-2-ol (F11.1.43), 2-[2-fluoro-6-[(8-fluoro-2-methyl-3-quinolyl)oxy]phen-yl]propan-2-ol (F11.1.44), 3-(5-fluoro-3,3,4,4-tetramethyl-3,4-dihydroisoquinolin-1-yl)quinoline (F11.1.45), 3-(4,4-difluoro-3,3-dimethyl-3,4-dihydroisoquinolin-1-yl) quinoline (F11.1.46), 3-(4,4,5-trifluoro-3,3-dimethyl-3,4-dihy-droisoquinolin-1-yl)quinoline (F11.1.47), 9-fluoro-2,2-dimethyl-5-(3-quinolyl)-3H-1,4-benzoxa-zepine (F11.1.48),

wherein component A and component C are present in a weight ratio from 1000:1 to 1:1000, and component B and C are present in a weight ratio from 1000:1 to 1:1000.

Ternary mixtures of a mixture A and a fungicide C from the groups F.1 to F.11 are another preferred embodiment of the invention. The ternary mixtures of the present invention have excellent activity against a broad spectrum of phytopathogenic fungi and animal pests.

The mixtures of the present invention have excellent activity against a broad spectrum of animal pests.

They are in particular suitable for efficiently controlling invertebrate pests. Particular, they are suitable for efficiently controlling arthropodal pests such as arachnids, myriapedes and insects as well as nematodes.

In particular, they are suitable for controlling insect pests, such as insects from the order of lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena

scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis;

beetles (Coleoptera), for example Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus and Sitophilus granaria;

flies, mosquitoes *(Diptera),* e.g. *Aedes aegypti, Aedes albopictus, Aedes vexans, Anastrepha ludens, Anopheles maculipennis, Anopheles crucians, Anopheles albimanus, Anopheles gambiae, Anopheles freebomi, Anopheles leucosphyrus, Anopheles minimus, Anopheles quadrimaculatus, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca autumnalis, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga spp., Simulium vittatum, Stomoxys calcitrans, Tabanus bovinus, Tabanus atratus, Tabanus lineola,* and *Tabanus similis, Tipula oleracea,* and *Tipula paludosa;*

thrips (Thysanoptera), e.g. Dichromothrips corbetti, Dichromothrips ssp., Frankliniella fusca, Frankliniella occidentalis, Frankliniella tritici, Scirtothrips citri, Thrips oryzae, Thrips palmi and Thrips tabaci,

termites (Isoptera), e.g. Calotermes flavicollis, Leucotermes flavipes, Heterotermes aureus, Reticulitermes flavipes, Reticulitermes virginicus, Reticulitermes lucifugus, Reticulitermes san-tonensis, Reticulitermes grassei, Termes natalensis, and Coptotermes formosanus;

cockroaches (*Blattaria- Blattodea*), e.g. *Blattella germanica, Blattella asahinae, Periplaneta americana, Periplaneta japonica, Periplaneta brunnea, Periplaneta fuligginosa, Periplaneta australasiae,* and *Blatta orientalis;*

bugs, aphids, leafhoppers, whiteflies, scale insects, cicadas (*Hemiptera*), e.g. *Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Bemisia argentifolii, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzus persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma* spp., and *Arilus critatus;*

ants, bees, wasps, sawflies (*Hymenoptera*), e.g. *Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Lasius niger, Monomorium pharaonis, Solenopsis geminata, Solenopsis invicta, Solenopsis richteri, Sole-*

*nopsis xyloni, Pogonomyrmex barbatus, Pogonomyrmex californicus, Pheidole megacephala, Dasymutilla occidentalis, Bombus spp., Vespula squamosa, Paravespula vulgaris, Paravespula pennsylvanica, Paravespula germanica, Dolichovespula maculata, Vespa crabro, Polistes rubiginosa, Camponotus floridanus,* and *Linepithema humile;*

crickets, grasshoppers, locusts (Orthoptera), e.g. Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera, and Locustana pardalina;

arachnoidea, such as arachnids *(Acarina),* e.g. of the families Argasidae, Ixodidae and Sarcoptidae, such as *Amblyomma americanum, Amblyomma variegatum, Ambryomma maculatum, Argas persicus, Boophilus annulatus, Boophilus decoloratus, Boophilus microplus, Dermacentor silvarum, Dermacentor andersoni, Dermacentor variabilis, Hyalomma truncatum, Ixodes ricinus, Ixodes rubicundus, Ixodes scapularis, Ixodes holocyclus, Ixodes pacificus, Omithodorus moubata, Ornithodorus hermsi, Ornithodorus turicata, Omithonyssus bacoti, Otobius megnini, Dermanyssus gallinae, Psoroptes ovis, Rhipicephalus sanguineus, Rhipicephalus appendiculatus, Rhipicephalus evertsi, Sarcoptes scabiei,* and Eriophyidae spp. such as *Aculus schlechtendali, Phyllocoptrata oleivora* and *Eriophyes sheldoni*; Tarsonemidae spp. such as *Phytonemus pallidus and Polyphagotarsonemus latus;* Tenuipalpidae spp. such as *Brevipalpus phoenicis;* Tetranychidae spp. such as *Tetranychus cinnabarinus, Tetranychus kanzawai, Tetranychus pacificus, Tetranychus telarius* and *Tetranychus* urticae, Panonychus ulmi, Panonychus citri, and *Oligonychus pratensis;* Araneida, e.g. *Latrodectus mactans,* and *Loxosceles reclusa;*

fleas (*Siphonaptera*), e.g. *Ctenocephalides felis, Ctenocephalides canis, Xenopsylla cheopis, Pulex irritans, Tunga penetrans,* and *Nosopsyllus fasciatus,*

silverfish, firebrat (Thysanura), e.g. Lepisma saccharina and Thermobia domestica,

centipedes (Chilopoda), e.g. Scutigera coleoptrata,

millipedes (*Diplopoda*), e.g. *Narceus spp.,*

earwigs (Dermaptera), e.g. forficula auricularia,

lice (Phthiraptera), e.g. Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus and Solenopotes capillatus.

Collembola (springtails), *e.g. Onychiurus ssp..*

They are also suitable for controlling nematodes : plant parasitic nematodes such as root knot nematodes, *Meloidogyne hapla, Meloidogyne incognita, Meloidogyne javanica,* and other Meloidogyne species; cyst-forming nematodes, *Globodera rostochiensis* and other Globodera species; *Heterodera avenae, Heterodera glycines, Heterodera schachtii, Heterodera trifolii,* and other Heterodera species; Seed gall nematodes, Anguina species; Stem and foliar nematodes, Aphelenchoides species; Sting nematodes, *Belonolaimus longicaudatus* and other Belonolaimus species; Pine nematodes, *Bursaphelenchus xylophilus* and other Bursaphelenchus species; Ring nematodes, Criconema species, Criconemella species, Criconemoides species, Mesocriconema species; Stem and bulb nematodes, *Ditylenchus destructor, Ditylenchus dipsaci* and other Ditylenchus species; Awl nematodes, Dolichodorus species; Spiral nematodes, *Helio-cotylenchus multicinctus* and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, *Longidorus elongatus* and other Longidorus species; Lesion nematodes, *Pratylenchus neglectus, Pratylenchus penetrans, Pratylenchus curvitatus, Pratylenchus goodeyi* and other Pratylenchus species; Burrowing nematodes, *Radopholus similis* and other Radopholus species; Reniform nematodes, *Rotylenchus robustus* and other Rotylenchus species; Scutellonema species; Stubby root nematodes, *Trichodorus primitivus* and other Trichodorus species, Paratrichodorus species; Stunt nematodes, *Tylenchorhynchus claytoni,* Tylenchorhynchus dubius and other Tylenchorhynchus species; Citrus nematodes, Tylenchulus species; Dagger nematodes, Xiphinema species; and other plant parasitic nematode species.

They are also useful for controlling arachnids (Arachnoidea), such as acarians (Acarina), e.g. of the families Argasidae, Ixodidae and Sarcoptidae, such as Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and oligonychus pratensis.

The ternary mixtures comprising a fungicide C have excellent activity against a broad spectrum of phytopathogenic fungi *Ascomycetes, Basidiomycetes, Deuteromycetes* and *Peronosporomycetes* (syn. *Oomycetes*). Some of them

are systemically effective and can be employed in crop protection as foliar fungicides, as fungicides for seed dressing and as soil fungicides. They can also be used for treating seed.

They are particularly important in the control of a multitude of fungi on various cultivated plants, such as wheat, rye, barley, oats, rice, corn, lawns, bananas, cotton, soybean, coffee, sugar cane, grapevines, fruits and ornamental plants, and vegetables such as cucumbers, beans, tomatoes, potatoes and cucurbits, and on the seeds of these plants.

They are especially suitable for controlling the following plant diseases:

- *Alternaria species* on vegetables, oilseed rape, sugar beet and fruit and rice, e.g. *A. solani* or *A. alternata* on potatoes and tomatoes;
- *Aphanomyces* species on sugar beet and vegetables;
- *Ascochyta* species on cereals and vegetables;
- *Bipolaris* and *Drechslera* species on corn, cereals, rice and lawns, e.g. *D. maydis* on corn;
- *Blumeria graminis* (powdery mildew) on cereals;
- *Botrytis cinerea* (gray mold) on strawberries, vegetables, flowers and grapevines;
- *Bremia lactucae* on lettuce;
- *Cercospora* species on corn, soybeans, rice and sugar beet;
- *Cochliobolus* species on corn, cereals, rice, e.g. *Cochliobolus sativus* on cereals, *Cochliobolus miyabeanus* on rice;
- *Colletotricum* species on soybeans and cotton;
- *Drechslera* species, *Pyrenophora* species on corn, cereals, rice and lawns, e.g. *D. teres* on barley or *D. tritici-repentis* on wheat;
- *Esca on* grapevines, caused by *Phaeoacremonium chlamydosporium, Ph. Aleophilum* and *Formitipora punctata (syn. Phellinus punctatus)*;
- *Exserohilum* species on corn;
- *Erysiphe cichoracearum* and *Sphaerotheca fuliginea* on cucumbers;
- *Fusarium* and *Verticillium* species on various plants, e.g. *F. graminearum* or *F. culmorum* on cereals or *F. oxysporum* on a multitude of plants, such as, e.g., tomatoes;
- *Gaeumanomyces graminis* on cereals;
- *Gibberella* species on cereals and rice (e.g. *Gibberella fujikuroi* on rice);
- *Grainstaining complex* on rice;
- *Helminthosporium* species on corn and rice;
- *Michrodochium nivale* on cereals;
- *Mycosphaerella species* on cereals, bananas and peanuts, for example, *M. graminicola* on wheat or *M.fijiensis* on bananas;
- *Peronospora species* on cabbage and bulbous plants, e.g. *P. brassicae on* cabbage or *P. destructoron* onions;
- *Phakopsara pachyrhizi* and *Phakopsara meibomiae* on soybeans;
- *Phomopsis* species on soybeans and sunflowers;
- *Phytophthora infestans* on potatoes and tomatoes;
- *Phytophthora* species on various plants, e.g. *P. capsici* on bell pepper;
- *Plasmopara viticola* on grapevines;
- *Podosphaera leucotricha* on apples;
- *Pseudocercosporella herpotrichoides* on cereals;
- *Pseudoperonospora* on various plants, e.g. *P. cubensis* on cucumber or *P. humili* on hops;
- *Puccinia species* on various plants, e.g. *P. triticina, P. striformins, P. hordei* or *P.graminis* on cereals or *P. asparagi* on asparagus;
- *Pyricularia oryzae, Corticium sasakii, Sarocladium oryzae, S.attenuatum, Entyloma oryzae* on rice;
- *Pyricularia grisea* on lawns and cereals;
- *Pythium spp.* on lawns, rice, corn, cotton, oilseed rape, sunflowers, sugar beet, vegetables and other plants, e.g. *P. ultiumum* on various plants, *P. aphanidermatum* on lawns;
- *Rhizoctonia species* on cotton, rice, potatoes, lawns, corn, oilseed rape, sugar beet, vegetables and on various plants, e.g. *R. solani* on beet and various plants;
- *Rhynchosporium secalis* on barley, rye and triticale;
- *Sclerotinia species* on oilseed rape and sunflowers;
- *Septoria tritici* and *Stagonospora nodorum* on wheat;
- *Erysiphe* (*syn. Uncinula*) *necatoron* grapevines;
- *Setospaeria* species on corn and lawns;
- *Sphacelotheca reilinia* on corn;
- *Thievaliopsis* species on soybeans and cotton;
- *Tilletia* species on cereals;

- *Ustilago* species on cereals, corn and sugar cane, e.g. *U. maydis* on corn;
- *Venturia* species (scab) on apples and pears, e.g. *V. inaequalis* on apples.

The mixtures according to the invention are also suitable for controlling Lepidoptera, Coleoptera, Diptera, Thysanoptera and Hemiptera. In particular, the mixtures are useful for the control of Thysanoptera and Hemiptera, especially Hemiptera.

The present invention relates to the pesticidal mixture A which is particularly suitable for controlling pests from the family of Pentatomidae and/or Cicadellidae and/or Aleyrodidae and/or Aphididae, which are typical pests on soybean plants.

In one preferred embodiment, the present invention relates to the use or method comprising the application of the pesticidal mixtures as defined above, wherein the pests are selected from the group consisting of green stink bug (*Acrosternum hilare*), brown marmorated stink bug (*Halyomorpha halys*), redbanded stink bug (*Piezodorus guildinii*), neotropical brown stink bug (*Euschistus heros*), brown stink bug (*Euschistus servus*), kudzu bug (*Megacopta cribraria*), red-shouldered stink bug (*Thyanta custator*) and the dusky-brown stink bug (*Euschistus tristigmus*), the southern green stink bug (*Nezara viridula*), and combinations thereof.

In one embodiment the stinkbug target is Nezara viridula, Piezodorus spp., Acrosternum spp.. Euschistus and in particular *Euchistus heros* are the preferred targets. More preferably the pesticidal mixtures are used to control Pentatomidae including green stink bug (*Acrosternum hilare*), brown marmorated stink bug (*Halyomorpha halys*), redbanded stink bug (*Piezodorus guildinii*), neotropical brown stink bug (*Euschistus heros*), brown stink bug (*Euschistus servus*), and kudzu bug (*Megacopta cribraria*), red-shouldered stink bug (*Thyanta custator*), dusky-brown stink bug (*Euschistus tristigmus*), and southern green stink bug (*Nezara viridula*).

Furthermore, the pesticidal mixture A is particularly suitable for controlling pests Aleyrodidae including sweetpotato whitefly (*Bemisia tabaci*), Aphididae including cotton aphid (*Aphis gossypii*) and soybean aphid (*Aphis glycines*) and combinations thereof.

In another embodiment, the pests are *Thyanta custator.*

In another embodiment, the pests are *Euschistus tristigmus.*

In another embodiment, the pests are *Acrostemum hilare.*

In another embodiment, the pests are *Halyomorpha halys.*

In another embodiment, the pests are *Piezodorus guildinii.*

In another embodiment, the pests are *Euschistus heros.*

In another embodiment, the pests are *Euschistus servus.*

In another embodiment, the pests are *Megacopta cribraria.*

In another embodiment, the pests are *Thyanta custator.*

In another embodiment, the pests are *Euschistus tristigmus.*

In another embodiment, the pests are *Nezara viridula.*

In another embodiment, the pests are *Bemisia tabacii.*

In another embodiment, the pests are *Aphis gossypii.*

In another embodiment, the pests are *Aphis glycines .*

In another embodiment, the pests are *Amrasca biguttula biguttula.*

In another embodiment, the pests are *Empoasca fabae.*

In another embodiment, the pests are *Epoasca kraemeri.*

The pesticidal mixture A is preferably used on Faboideae, in particular soybean, to control stinkbugs, e.g. Nezara spp. (e.g. *Nezara viridula, Nezara antennata, Nezara hilaris),* Piezodorus spp. (e.g. *Piezodorus guildinii*), Acrosternum spp.(e.g. *Acrosternum hilare),* Euchistus spp. (e.g. *Euchistus heros, Euschistus servus), Halyomorpha halys, Megacopta cribaria, Plautia crossota, Riptortus clavatus, Rhopalus msculatus, Antestiopsis orbitalus, Dectes texanus,* Dichelops spp. (e.g. *Dichelops furcatus, Dichelops melacanthus),* Eurygaster spp. (e.g. *Eurygaster intergriceps, Eurygaster maurd*), Oebalus spp. (e.g. *Oebalus mexicana, Oebalus poecilus, Oebalus pugnase,* Scotinophara spp. (e.g. *Scotinophara lurida, Scotinophara coarctatd*).

Preferred targets include *Acrosternum hilare, Antestiopsis orbitalus, Dichelops furcatus, Dichelops melacanthus, Euchistus heros, Euschistus servus, Megacopta cribaria, Nezara viridula, Nezara hilare, Piezodorus guildinii, Halyomorpha halys.*

Further Pentatomidae pests that can be controlled according to the invention are Eysarcoris, in particular *Eysarcoris aeneus.*

The mixtures are preferably used on Faboideae, in particular soybean, to control whiteflies, e.g. sweetpotato whitefly (*Bemisia tabaci*).

The mixtures are preferably used on Faboideae, in particular soybean, to control aphids, e.g. soybean aphid (*Aphis glycines*).

The mixtures are preferably used on Faboideae, in particular soybean, to control leafhoppers, e.g. potato

leafhopper (*Empoasca fabae*).

The mixtures are preferably used on Faboideae, in particular soybean, to control leafhoppers, e.g. Lorito verde (small green pakeet) (*Empoasca kraemeri*).

The pesticidal mixture A is preferably used to control lepidopterans (Lepidoptera), such as *Spodoptera frugiperda, Spodoptera littoralis, Spodoptera litura*; beetles (Coleoptera), such as *Anthonomus grandis, Anthonomus pomorum,* and thrips (Thysanoptera), such as *Scirtothrips citri.*

The pesticidal mixture can be converted into the customary formulations, for example solutions, emulsions, suspensions, dusts, powders, pastes and granules. The use form depends on the particular intended purpose; in each case, it should ensure a fine and even distribution of the active compounds.

The pesticidal mixture can be converted into customary types of agro-chemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Mono-graph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Examples for suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharide powders, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpoly-glucosides. Examples of polymeric surfactants are homo- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene

oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the active compounds on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinyl acetates, polyvinyl alcohols, polyacrylates, biological or synthetic waxes, and cellulose ethers.

Examples for composition types and their preparation are:

i) Water-soluble concentrates (SL, LS)
10-60 wt% of a mixture of the invention and 5-15 wt% wetting agent (e.g. alcohol alkoxylates) are dissolved in water and/or in a water-soluble solvent (e.g. alcohols) up to 100 wt%. The active substance dissolves upon dilution with water.

ii) Dispersible concentrates (DC)
5-25 wt% of a mixture of the invention and 1-10 wt% dispersant (e. g. polyvi-nylpyrrolidone) are dissolved in up to 100 wt% organic solvent (e.g. cyclohexanone). Dilution with water gives a dispersion.

iii) Emulsifiable concentrates (EC) 15-70 wt% of a mixture of the invention and 5-10 wt% emulsifiers (e.g. calcium dodecylbenzenesulfonate and castor oil ethoxylate) are dissolved in up to 100 wt% water-insoluble organic solvent (e.g. aromatic hydrocarbon). Dilution with water gives an emulsion.

iv) Emulsions (EW, EO, ES)
5-40 wt% of a mixture of the invention and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into up to 100 wt% water by means of an emulsifying machine and made into a homogeneous emulsion. Dilution with water gives an emulsion.

v) Suspensions (SC, OD, FS)
In an agitated ball mill, 20-60 wt% of a mixture of the invention are comminuted with addition of 2-10 wt% dispersants and wetting agents (e.g. sodium lignosulfonate and alcohol ethoxylate), 0,1-2 wt% thickener (e.g. xanthan gum) and up to 100 wt% water to give a fine active substance suspension. Dilution with water gives a stable suspension of the active substance. For FS type composition up to 40 wt% binder (e.g. polyvinylalcohol) is added.

vi) Water-dispersible granules and water-soluble granules (WG, SG)
50-80 wt% of a mixture of the invention are ground finely with addition of up to 100 wt% dispersants and wetting agents (e.g. sodium lignosulfonate and alcohol ethoxylate) and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)
50-80 wt% of a mixture of the invention are ground in a rotor-stator mill with ad-dition of 1-5 wt% dispersants (e.g. sodium lignosulfonate), 1-3 wt% wetting agents (e.g. alcohol ethoxylate) and up to 100 wt% solid carrier, e.g. silica gel. Dilution with water gives a stable dis-persion or solution of the active substance.

viii) Gel (GW, GF)
In an agitated ball mill, 5-25 wt% of a mixture of the invention are comminuted with addition of 3-10 wt% dispersants (e.g. sodium lignosulfonate), 1-5 wt% thickener (e.g. carboxymethylcellulose) and up to 100 wt% water to give a fine suspension of the active substance. Dilution with water gives a stable suspension of the active substance.

ix) Microemulsion (ME)
5-20 wt% of a mixture of the invention are added to 5-30 wt% organic solvent blend (e.g. fatty acid dimethylamide and cyclohexanone), 10-25 wt% surfactant blend (e.g. alcohol ethoxylate and arylphenol ethoxylate), and water up to 100 %. This mixture is stirred for 1 h to produce spontaneously a thermodynamically stable microemulsion.

x) Microcapsules (CS)
An oil phase comprising 5-50 wt% of a mixture of the invention, 0-40 wt% water insoluble organic solvent (e.g. aromatic

hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of a mixture of the invention, 0-40 wt% water insoluble organic solvent (e.g. aromatic hydrocarbon), and an isocyanate monomer (e.g. diphenylme-thene-4,4'-diisocyanatae) are dispersed into an aqueous solution of a protective colloid (e.g. polyvinyl alcohol). The addition of a polyamine (e.g. hexamethylenediamine) results in the formation of a polyurea microcapsule. The monomers amount to 1-10 wt%. The wt% relate to the total CS composition.

xi) Dustable powders (DP, DS)

1-10 wt% of a mixture of the invention are ground finely and mixed intimately with up to 100 wt% solid carrier, e.g. finely divided kaolin.

xii) Granules (GR, FG)

0.5-30 wt% of a mixture of the invention is ground finely and associated with up to 100 wt% solid carrier (e.g. silicate). Granulation is achieved by extrusion, spray-drying or the fluidized bed.

xiii) Ultra-low volume liquids (UL)

1-50 wt% of a mixture of the invention are dissolved in up to 100 wt% organic solvent, e.g. aromatic hydrocarbon.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and most preferably between 0.5 and 75%, by weight of active substance. The active substances are employed in a purity of from 90% to 100%, preferably from 95% to 100% (according to NMR spectrum).

Various types of oils, wetters, adjuvants, fertilizer, or micronutrients, and other pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary or ternary mixture may be mixed by the user himself in a spray tank and further auxiliaries may be added, if appropriate.

In a further embodiment, either individual components of the composition according to the invention or partially premixed components, e. g. components comprising compounds of the present invention and/or mixing partners as defined above, may be mixed by the user in a spray tank and further auxiliaries and additives may be added, if appropriate.

In a further embodiment, either individual components of the composition according to the invention or partially premixed components, e. g. components comprising compounds of the present invention and/or mixing partners as defined above, can be applied jointly (e.g. after tank mix) or consecutively.

The mixtures of the present invention are employed as such or in form of compositions by treating the insects, the fungi or the plants, plant propagation materials, such as seeds, soil, surfaces, materials or rooms to be protected from insecticidal attack with a pesticidally effective amount of the active compounds. The application can be carried out both before and after the infection of the plants, plant propagation materials, such as seeds, soil, surfaces, materials or rooms by the insects.

The present invention also includes a non-therapeutic method of combating animal pests and harmful fungi which comprises contacting the fungi and/or animal pests, their habit, breeding ground, food supply, cultivated plants, seed, soil, area, material or environment in which the animal pests are growing or may grow, or the materials, plants, seeds, soils, surfaces or spaces to be protected from animal attack or infestation with a pesticidally effective amount of a mixture according to the invention. The mixtures or compositions of these mixtures can also be employed for protecting plants from attack or infestation by invertebrate pests such as insects, acarids or nematodes comprising contacting a plant, or soil or water in which the plant is growing.

The pyrazole compound A and compound B are applied in a weight ratio of from 1000:1 to 1:1000, preferably from 100:1 to 1:100, more preferably from 20:1 to 1:20, in particular from 10:1 to 1:10.

In ternary mixtures the pyrazole compound A selected from compound I-1 and B are usually present in ratio ranges of from 500:1:1, to 500:100:1 to 500:100:1 to 1:100:100 to 1:100:1 to 1:1:100.

Depending on the desired effect, the application rates of the mixtures of the invention are from 5 g/ha to 2000 g/ha, preferably from 50 to 1500 g/ha, in particular from 50 to 750 g/ha.

The mixtures according to the invention are effective through both contact and ingestion. According to a preferred embodiment of the invention, the mixtures according to the present invention are employed via soil application. According to a further preferred embodiment of the invention, the mixtures of the present invention are employed via soil application. Soil application is especially favorable for use against ants, termites, crickets, or cockroaches.

According to another preferred embodiment of the invention, for use against non crop pests such as ants, termites, wasps, flies, mosquitoes, crickets, locusts, or cockroaches the mixtures according to the present invention are prepared into a bait preparation. The mixtures of the invention may also be applied against said non-crop pests.

The bait can be a liquid, a solid or a semisolid preparation (e.g. a gel).

Another aspect of the present invention is when preparing the mixtures, it is preferred to employ the pure active compounds I-1 and B, to which further active compounds, e.g. against harmful fungi or having herbicidal activity, or growth-regulating agents or fertilizers can be added.

Compositions comprising the inventive mixture may further contain other active ingredients than those listed above. Compositions of this invention may further contain other active ingredients than those listed above. For example fungicides, herbicides, fertilizers such as ammonium nitrate, urea, potash, and superphosphate, phytotoxicants and plant growth regulators and safeners. These additional ingredients may be used sequentially or in combination with the above-described compositions, if appropriate also added only immediately prior to use (tank mix). For example, the plant(s) may be sprayed with a composition of this invention either before or after being treated with other active ingredients.

The mixtures according to the invention can be applied to any and all developmental stages, such as egg, larva, pupa, and adult. The pests may be controlled by contacting the target pest, its food supply, habitat, breeding ground or its locus with a pesticidally effective amount of the inventive mixtures or of compositions comprising the mixtures.

"Locus" means a plant, seed, soil, area, material or environment in which a pest is growing or may grow.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures and/or compositions used in the invention. A pesticidally effective amount of the mixtures and/or compositions will also vary according to the prevailing conditions such as desired pesticidal effect and duration, weather, target species, locus, mode of application, and the like.

The mixtures or compositions of these mixtures can also be employed for protecting plants from attack or infestation by invertrebrate pests such as insects, acarids or nematodes comprising contacting a plant, or soil or water in which the plant is growing.

The inventive mixtures are effective through both contact (via soil, glass, wall, bed net, carpet, plant parts or animal parts), and ingestion (bait, or plant part) and through trophallaxis and transfer.

Preferred application methods are into water bodies, via soil, cracks and crevices, pastures, manure piles, sewers, into water, on floor, wall, or by perimeter spray application and bait. According to another preferred embodiment of the invention, for use against non crop pests such as ants, termites, wasps, flies, mosquitoes, crickets, locusts, or cockroaches the inventive mixtures are prepared into a bait preparation.

The bait can be a liquid, a solid or a semisolid preparation (e.g. a gel). The bait employed in the composition is a product which is sufficiently attractive to incite insects such as ants, termites, wasps, flies, mosquitoes, crickets etc. or cockroaches to eat it. This attractant may be chosen from feeding stimulants or para and / or sex pheromones readily known in the art.

Methods to control infectious diseases transmitted by insects (e.g. malaria, dengue and yellow fever, lymphatic filariasis, and leishmaniasis) with the inventive mixtures and their respective compositions also comprise treating surfaces of huts and houses, air spraying and impregnation of curtains, tents, clothing items, bed nets, tsetse-fly trap or the like. Insecticidal compositions for application to fibres, fabric, knitgoods, non-wovens, netting material or foils and tarpaulins preferably comprise a composition including the inventive mixtures, optionally a repellent and at least one binder.

The mixtures and the compositions comprising them can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

In the case of soil treatment or of application to the pests dwelling place or nest, the quantity of active ingredient(s) ranges from 0.0001 to 500 g per 100 $m^2$, preferably from 0.001 to 20 g per 100 $m^2$.

Customary application rates in the protection of materials are, for example, from 0.01 g to 1000 g of active compounds per $m^2$ treated material, desirably from 0.1 g to 50 g per $m^2$.

Insecticidal compositions for use in the impregnation of materials typically contain from 0.001 to 95 weight %, preferably from 0.1 to 45 weight %, and more preferably from 1 to 25 weight % of at least one repellent and / or insecticide.

For use in bait compositions, the typical content of active ingredient(s) is from 0.0001 weight % to 15 weight %, desirably from 0.001 weight % to 5% weight % of active compound. The composition used may also comprise other additives such as a solvent of the active material, a flavoring agent, a preserving agent, a dye or a bitter agent. Its

attractiveness may also be enhanced by a special color, shape or texture.

For use in spray compositions, the content of the mixture of the active ingredients is from 0.001 to 80 weights %, preferably from 0.01 to 50 weight % and most preferably from 0.01 to 15 weight %.

For use in treating crop plants, the rate of application of the mixture of the active ingredients of this invention may be in the range of 0.1 g to 4000 g per hectare, desirably from 25 g to 600 g per hectare, more desirably from 50 g to 500 g per hectare.

In the context of the present invention, the term plant refers to an entire plant, a part of the plant or the plant propagation material.

The mixtures of the present invention and the compositions comprising them are particularly important in the control of a multitude of insects on various cultivated plants.

Plants which can be treated with the inventive mixtures include all genetically modified plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants. Seedlings and young plants, which are to be transplanted after germination or after emergence from soil, may also be mentioned. These young plants may also be protected before transplantation by a total or partial treatment by immersion or pouring.

The term "cultivated plants" is to be understood as including plants which have been modified by breeding, mutagenesis or genetic engineering. Genetically modified plants are plants, which genetic material has been so modified by the use of recombinant DNA techniques that under natural circumstances cannot be obtained by cross breeding, mutations or natural recombination. Typically, one or more genes have been integrated into the genetic material of a genetically modified plant in order to improve certain properties of the plant.

The term "cultivated plants" is to be understood also including plants that have been rendered tolerant to applications of specific classes of herbicides, such as hydroxy-phenylpyruvate dioxy-genase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e. g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), for example Clearfield® summer rape (Canola) being tolerant to imidazolinones, e. g. imazamox. Genetic engineering methods have been used to render cultivated plants, such as soybean, cotton, corn, beets and rape, tolerant to herbicides, such as glyphosate and glufosinate, some of which are commercially available under the trade names RoundupReady® (glyphosate) and LibertyLink® (glufosinate).

The term "cultivated plants" is to be understood also including plants that are by the use of recombinant DNA techniques capable to synthesize one or more insecticidal proteins, especially those known from the bacterial genus Bacillus, particularly from Bacillus thuringiensis, such as δ-endotoxins, e. g. CrylA(b), CrylA(c), CrylF, CrylF(a2), CryllA(b), CryIIIA, CryllIB(b1) or Cry9c; vegetative insecticidal proteins (VIP), e. g. VIP1, VIP2, VIP3 or VIP3A; insecticidal proteins of bacteria colonizing nematodes, for example Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, for example WO 02/015701). Further examples of such toxins or genetically-modified plants capable of synthesizing such toxins are dis-closed, for example, in EP-A 374 753, WO 93/007278, WO 95/34656, EP-A 427 529, EP-A 451 878, WO 03/018810 und WO 03/052073. The methods for producing such genetically modified plants are generally known to the person skilled in the art and are described, for example, in the publications mentioned above. These insecticidal proteins contained in the genetically modified plants impart to the plants producing these proteins tolerance to harmful pests from all taxonomic groups of insects, especially to beetles (Coeloptera), two-winged insects (Diptera), and butterflies (Lepidoptera).

The term "cultivated plants" is to be understood also including plants that are by the use of recombinant DNA techniques capable to synthesize one or more proteins to in-crease the resistance or tolerance of those plants to bacterial, viral or fungal pathogens. Examples of such proteins are the so-called "pathogenesis-related proteins" (PR proteins, see, for example EP-A 392 225), plant disease resistance genes (for example potato cultivars, which express resistance genes acting against Phytophthora infestans derived from the mexican wild potato Solanum bulbocastanum) or T4-lysozym (e. g. potato cultivars capable of synthesizing these proteins with increased resistance against bacteria such as Erwinia amylvora). The methods for producing such genetically modified plants are generally known to the person skilled in the art and are described, for example, in the publications mentioned above.

The term "cultivated plants" is to be understood also including plants that are by the use of recombinant DNA techniques capable to synthesize one or more proteins to increase the productivity (e. g. bio mass production, grain yield, starch content, oil content or protein content), tolerance to drought, salinity or other growth-limiting environ-mental factors or tolerance to pests and fungal, bacterial or viral pathogens of those plants.

The term "cultivated plants" is to be understood also including plants that contain by the use of recombinant DNA techniques a modified amount of substances of content or new substances of content, specifically to improve human or animal nutrition, e.g. oil crops that produce health-promoting long-chain omega-3 fatty acids or unsaturated omega-9 fatty acids (e. g. Nexera® rape). The term "cultivated plants" is to be understood also including plants that contain by the use of recombinant DNA techniques a modified amount of substances of content or new substances of content, specifically to improve raw material production, e.g. potatoes that produce increased amounts of amylopectin (e.g. Amflora® potato).

Some of the inventive mixtures have systemic action and can therefore be used for the protection of the plant shoot against foliar pests as well as for the treatment of the seed and roots against soil pests.

The mixtures according to the present invention are therfore suitable for the treatment of seeds in order to protect the seed from insect pest, in particular from soil-living insect pests and the resulting plants' roots and shoots against soil pests and foliar insects.

The protection of the resulting plant's roots and shoots is preferred.

More preferred is the protection of resulting plant's shoots from piercing and sucking insects. The present invention therefore comprises a method for the protection of seeds from insects, in particular from soil insects and of the seedlings' roots and shoots from insects, in particular from soil and foliar insects, said method comprising contacting the seeds before sowing and/or after pregermination with mixtures according to the present invention. Particularly preferred is a method, wherein the plant's roots and shoots are protected, more preferably a method, wherein the plants shoots are protected from piercing and sucking insects, most preferably a method, wherein the plants shoots are protected from aphids.

The term seed embraces seeds and plant propagules of all kinds including but not limited to true seeds, seed pieces, suckers, corms, bulbs, fruit, tubers, grains, cuttings, cut shoots and the like and means in a preferred embodiment true seeds.

The term seed treatment comprises all suitable seed treatment techniques known in the art, such as seed dressing, seed coating, seed dusting, seed soaking and seed pelleting.

The present invention also comprises seeds coated with or containing the active compounds. The term "coated with and/or containing" generally signifies that the active ingredient(s) are for the most part on the surface of the propagation product at the time of application, although a greater or lesser part of the ingredient may penetrate into the propagation product, depending on the method of application. When the said propagation products are (re)planted, it may absorb the active ingredient.

Suitable seeds are seeds of cereals, root crops, oil crops, vegetables, spices, ornamentals, for example seed of durum and other wheat, barley, oats, rye, maize (fodder maize and sugar maize / sweet and field corn), soybeans, oil crops, crucifers, cotton, sunflowers, bananas, rice, oilseed rape, turnip rape, sugarbeet, fodder beet, eggplants, potatoes, grass, lawn, turf, fodder grass, tomatoes, leeks, pumpkin/squash, cabbage, iceberg lettuce, pepper, cucumbers, melons, Brassica species, melons, beans, peas, garlic, onions, carrots, tuberous plants such as potatoes, sugar cane, tobacco, grapes, petunias, geranium/pelargoniums, pansies and impatiens.

In addition, the mixtures according to the invention may also be used for the treatment seeds from plants, which tolerate the action of herbicides or fungicides or insecticides owing to breeding, including genetic engineering methods.

For example, the active mixtures can be employed in treatment of seeds from plants, which are resistant to herbicides from the group consisting of the sulfonylureas, imidazolinones, glufosinate-ammonium or glyphosate-isopropylammonium and analogous active substances (see for example, EP-A 242 236, EP-A 242 246) (WO 92/00377) (EP-A 257 993, US 5,013,659) or in transgenic crop plants, for example cotton, with the capability of producing Bacillus thuringiensis toxins (Bt toxins) which make the plants resistant to certain pests (EP-A 142 924, EP-A 193 259).

Furthermore, the mixtures according to the present invention can be used also for the treatment of seeds from plants, which have modified characteristics in comparison with existing plants consist, which can be generated for example by traditional breeding methods and/or the generation of mutants, or by recombinant procedures). E.g. a number

of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

The seed treatment application of the mixtures is carried out by spraying or by dusting the seeds before sowing of the plants and before emergence of the plants.

In the treatment of seeds the corresponding formulations are applied by treating the seeds with an effective amount of the mixtures of the invention. Herein, the application rates of the active compounds are generally from 0,1 g to 10 kg per 100 kg of seed, preferably from 1 g to 5 kg per 100 kg of seed, in particular from 1 g to 2,5 kg per 100 kg of seed. For specific crops such as lettuce the rate can be higher.

Compositions, which are especially useful for seed treatment are e.g.:

A Soluble concentrates (SL, LS)
D Emulsions (EW, EO, ES)
E Suspensions (SC, OD, FS)
F Water-dispersible granules and water-soluble granules (WG, SG)
G Water-dispersible powders and water-soluble powders (WP, SP, WS)
H Gel-Formulations (GF)
I Dustable powders (DP, DS)

Conventional seed treatment formulations include for example flowable concentrates FS, solutions LS, powders for dry treatment DS, water dispersible powders for slurry treatment WS, water-soluble powders SS and emulsion ES and EC and gel formulation GF. These formulations can be applied to the seed diluted or undiluted. Application to the seeds is carried out before sowing, either directly on the seeds or after having pregerminated the latter

In a preferred embodiment a FS formulation is used for seed treatment. Typcially, a FS formulation may comprise 1-800 g/l of active ingredient(s), 1-200 g/l Surfactant, 0 to 200 g/l antifreezing agent, 0 to 400 g/l of binder, 0 to 200 g/l of a pigment and up to 1 liter of a solvent, preferably water.

Preferred FS formulations of mixtures for seed treatment usually comprise from 0.1 to 80% by weight (1 to 800 g/l) of the active ingredients, from 0.1 to 20 % by weight (1 to 200 g/l) of at least one surfactant, e.g. 0.05 to 5 % by weight of a wetter and from 0.5 to 15 % by weight of a dispersing agent, up to 20 % by weight, e.g. from 5 to 20 % of an anti-freeze agent, from 0 to 15 % by weight, e.g. 1 to 15 % by weight of a pigment and/or a dye, from 0 to 40 % by weight, e.g. 1 to 40 % by weight of a binder (sticker /adhesion agent), optionally up to 5 % by weight, e.g. from 0.1 to 5 % by weight of a thickener, optionally from 0.1 to 2 % of an anti-foam agent, and optionally a preservative such as a biocide, antioxidant or the like, e.g. in an amount from 0.01 to 1 % by weight and a filler/vehicle up to 100 % by weight.

Seed treatment formulations may additionally also comprise binders and optionally colorants. Binders can be added to improve the adhesion of the active materials on the seeds after treatment. Suitable binders are block copolymers EO/PO surfactants but also polyvinylalcoholsl, polyvinylpyrrolidones, polyacrylates, polymethacrylates, polybutenes, polyisobutylenes, polystyrene, polyethyleneamines, polyethyleneamides, polyethyleneimines (Lupasol®, Polymin®), polyethers, polyurethans, polyvinylacetate, tylose and copolymers derived from these polymers.

Optionally, also colorants can be included in the formulation. Suitable colorants or dyes for seed treatment formulations are Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

The invention also relates to seed comprising mixtures according to the invention. The amount of the mixture or the agriculturally useful salt thereof will in general vary from 0.1 g to 10 kg per 100 kg of seed, preferably from 1 g to 5 kg per 100 kg of seed, in particular from 1 g to 1000 g per 100 kg of seed.

The mixtures of the invention are in particular also suitable for being used for combating parasites in and on animals.

An object of the present invention is therfore also to provide new methods to control parasites in and on animals. Another object of the invention is to provide safer pesticides for animals. Another object of the invention is further to provide pesticides for animals that may be used in lower doses than existing pesticides. And another object of the invention is to provide pesticides for animals, which provide a long residual control of the parasites.

The present invention also provides a mixture for use in a therapeutic method for treating, controlling, preventing and protecting animals against infestation and infection by parasites, which comprises orally, topically or parenterally administering or applying to the animals a parasiticidally effective amount of the mixture of the present invention or a composition comprising it..

The disclosure also provides a process for the preparation of a composition for treating, controlling, preventing or

protecting animals against infestation or infection by parasites which comprises a parasiticidally effective amount of a mixture of the present invention or a composition comprising it..

Activity of compounds against agricultural pests does not suggest their suitability for control of endo- and ectoparasites in and on animals which requires, for example, low, non-emetic dosages in the case of oral application, metabolic compatibility with the animal, low toxicity, and a safe handling.

Surprisingly it has now been found that mixtures of the present invention are suitable for combating endo- and ectoparasites in and on animals.

Mixtures of the present invention and compositions comprising them are preferably used for controlling and preventing infestations and infections animals including warm-blooded animals (including humans) and fish. They are for example suitable for controlling and preventing infestations and infections in mammals such as cattle, sheep, swine, camels, deer, horses, pigs, poultry, rabbits, goats, dogs and cats, water buffalo, donkeys, fallow deer and reindeer, and also in fur-bearing animals such as mink, chinchilla and raccoon, birds such as hens, geese, turkeys and ducks and fish such as fresh- and salt-water fish such as trout, carp and eels.

Mixtures of the present invention and compositions comprising them are preferably used for controlling and preventing infestations and infections in domestic animals, such as dogs or cats.

Infestations in warm-blooded animals and fish include, but are not limited to, lice, biting lice, ticks, nasal bots, keds, biting flies, muscoid flies, flies, myiasitic fly larvae, chiggers, gnats, mosquitoes and fleas.

The mixtures of the present invention and compositions comprising them are suitable for systemic and/or non-systemic control of ecto- and/or endoparasites. They are active against all or some stages of development.

The mixtures of the present invention are especially useful for combating ectoparasites.

The mixture of the present invention is especially useful for combating parasites of the following orders and species, respectively:

fleas (Siphonaptera), e.g. *Ctenocephalides felis, Ctenocephalides canis, Xenopsylla cheopis, Pulex irritans, Tunga penetrans,* and *Nosopsyllus fasciatus,*

cockroaches (Blattaria - Blattodea), e.g. *Blattella germanica, Blattella asahinae, Periplaneta americana, Periplaneta japonica, Periplaneta brunnea, Periplaneta fuligginosa, Periplaneta australasiae,* and *Blatta orientalis,*

flies, mosquitoes (Diptera), e.g. *Aedes aegypti, Aedes albopictus, Aedes vexans, Anastrepha ludens, Anopheles maculipennis, Anopheles crucians, Anopheles albimanus, Anopheles gambiae, Anopheles freebomi, Anopheles leucosphyrus, Anopheles minimus, Anopheles quadrimaculatus, Calliphora vicina, Chrysomya bezziana, Chrysomya hominivorax, Chrysomya macellaria, Chrysops discalis, Chrysops silacea, Chrysops atlanticus, Cochliomyia hominivorax, Cordylobia anthropophaga, Culicoides furens, Culex pipiens, Culex nigripalpus, Culex quinquefasciatus, Culex tarsalis, Culiseta inornata, Culiseta melanura, Dermatobia hominis, Fannia canicularis, Gasterophilus intestinalis, Glossina morsitans, Glossina palpalis, Glossina fuscipes, Glossina tachinoides, Haematobia irritans, Haplodiplosis equestris, Hippelates spp., Hypoderma lineata, Leptoconops torrens, Lucilia caprina, Lucilia cuprina, Lucilia sericata, Lycoria pectoralis, Mansonia spp., Musca domestica, Muscina stabulans, Oestrus ovis, Phlebotomus argentipes, Psorophora columbiae, Psorophora discolor, Prosimulium mixtum, Sarcophaga haemorrhoidalis, Sarcophaga sp., Simulium vittatum, Stomoxys calcitrans, Tabanus bovinus, Tabanus atratus, Tabanus lineola,* and *Tabanus similis,*

lice (Phthiraptera), e.g. *Pediculus humanus capitis, Pediculus humanus corporis, Pthirus pubis, Haematopinus eurystemus, Haematopinus suis, Linognathus vituli, Bovicola bovis, Menopon gallinae, Menacanthus stramineus* and *Solenopotes capillatus.*

ticks and parasitic mites (Parasitiformes): ticks (Ixodida), e.g. *Ixodes scapularis, Ixodes holocyclus, Ixodes pacificus, Rhiphicephalus sanguineus, Dermacentor andersoni, Dermacentor variabilis, Amblyomma americanum, Ambryomma maculatum, Ornithodorus hermsi, Omithodorus turicata* and parasitic mites (Mesostigmata), e.g. *Ornithonyssus bacoti* and *Dermanyssus gallinae,*

Actinedida (Prostigmata) und Acaridida (Astigmata) e.g. *Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp.,Knemidocoptes spp., Cytodites spp.,* and *Laminosioptes spp,*

Bugs (Heteropterida): *Cimex lectularius, Cimex hemipterus, Reduvius senilis, Triatoma spp., Rhodnius ssp., Panstrongylus ssp.* and *Arilus critatus,*

Anoplurida, e.g. *Haematopinus spp., Linognathus spp., Pediculus spp., Phtirus spp.,* and *Solenopotes spp,*

Mallophagida (suborders Arnblycerina and Ischnocerina), e.g. *Trimenopon spp., Menopon spp., Trinoton spp., Bovicola spp., Werneckiella spp., Lepikentron spp., Trichodectes spp.,* and *Felicola spp,*

Roundworms Nematoda:

Wipeworms and Trichinosis (Trichosyringida), e.g. Trichinellidae *(Trichinella spp.),* (Trichuridae) *Trichuris spp.,*

*Capillaria spp,*
Rhabditida, e.g. *Rhabditis spp, Strongyloides spp., Helicephalobus spp,*
Strongylida, e.g. *Strongylus spp., Ancylostoma spp., Necator americanus, Bunostomum spp. (Hookworm), Trichostrongylus spp., Haemonchus contortus., Ostertagia spp., Cooperia spp., Nematodirus spp., Dictyocaulus spp., Cyathostoma spp., Oesophagostomum spp., Stephanurus dentatus, Ollulanus spp., Chabertia spp., Stephanurus dentatus , Syngamus trachea, Ancylostoma spp., Uncinaria spp., Globocephalus spp., Necator spp., Metastrongylus spp., Muellerius capillaris, Protostrongylus spp., Angiostrongylus spp., Parelaphostrongylus spp. Aleurostrongylus abstrusus,* and *Dioctophyma renale,*
Intestinal roundworms (Ascaridida), e.g. *Ascaris lumbricoides, Ascaris suum, Ascaridia galli, Parascaris equorum, Enterobius vermicularis (Threadworm), Toxocara canis, Toxascaris leonine, Skrjabinema spp.,* and *Oxyuris equi,*
Camallanida, e.g. *Dracunculus medinensis* (guinea worm)
Spirurida, e.g. *Thelazia spp. Wuchereria spp., Brugia spp., Onchocerca spp., Dirofilari spp.a, Dipetalonema spp., Setaria spp., Elaeophora spp., Spirocerca lupi,* and *Habronema spp.,*
Thorny headed worms (Acanthocephala), e.g. *Acanthocephalus spp., Macracanthorhynchus hirudinaceus* and *Oncicola spp,*
Planarians (Plathelminthes):

Flukes (Trematoda), e.g. *Faciola spp., Fascioloides magna, Paragonimus spp., Dicrocoelium spp., Fasciolopsis buski, Clonorchis sinensis, Schistosoma spp., Trichobilharzia spp., Alaria alata, Paragonimus spp.,* and *Nanocyetes spp,*
Cercomeromorpha, in particular Cestoda (Tapeworms), e.g. *Diphyllobothrium spp., Tenia spp., Echinococcus spp., Dipylidium caninum, Multiceps spp., Hymenolepis spp., Mesocestoides spp., Vampirolepis spp., Moniezia spp., Anoplocephala spp., Sirometra spp., Anoplocephala spp.,* and *Hymenolepis spp.*

The mixtures of the invention and compositions containing them are particularly useful for the control of pests from the orders Diptera, Siphonaptera and Ixodida.
Moreover, the mixtures of the invention and compositions containing them for combating mosquitoes is especially preferred.
The use of mixtures of the invention and compositions containing them for combating flies is a further preferred embodiment of the present invention.
Furthermore, the use of the mixtures of the invention and compositions containing them for combating fleas is especially preferred.
The mixtures of the invention and compositions containing them for use in a method of treatment for combating ticks is a further preferred embodiment of the present invention.
The mixtures of the present invention also are especially useful for combating endoparasites (roundworms nematoda, thorny headed worms and planarians).
Administration can be carried out both prophylactically and therapeutically.
Administration of the active compounds is carried out directly or in the form of suitable preparations, orally, topically/dermally or parenterally.
For oral administration to warm-blooded animals, the mixtures of the present invention may be formulated as animal feeds, animal feed premixes, animal feed concentrates, pills, solutions, pastes, suspensions, drenches, gels, tablets, boluses and capsules. In addition, the mixtures of the present invention may be administered to the animals in their drinking water. For oral administration, the dosage form chosen should provide the animal with 0.01 mg/kg to 100 mg/kg of animal body weight per day of the formula I-1 compound, preferably with 0.5 mg/kg to 100 mg/kg of animal body weight per day.
Alternatively, the mixtures of the present invention may be administered to animals parenterally, e.g., by intraruminal, intramuscular, intravenous or subcutaneous injection. The mixture compounds may be dispersed or dissolved in a physiologically acceptable carrier for subcutaneous injection. Alternatively, the mixtures of the present invention may be formulated into an implant for subcutaneous administration. In addition the mixture compounds may be transdermally administered to animals. For parenteral administration, the dosage form chosen should provide the animal with 0.01 mg/kg to 100 mg/kg of animal body weight per day of the active compounds.
The mixtures of the invention may also be applied topically to the animals in the form of dips, dusts, powders, collars, medallions, sprays, shampoos, spot-on and pour-on formulations and in ointments or oil-in-water or water-in-oil emulsions. For topical application, dips and sprays usually contain 0.5 ppm to 5,000 ppm and preferably 1 ppm to 3,000 ppm of the active compounds. In addition, the active compound mixtures may be formulated as ear tags for animals, particularly quadrupeds such as cattle and sheep.
Suitable preparations are:

- Solutions such as oral solutions, concentrates for oral administration after dilution, solutions for use on the skin or in body cavities, pouring-on formulations, gels;
- Emulsions and suspensions for oral or dermal administration; semi-solid preparations;
- Formulations in which the active compounds are processed in an ointment base or in an oil-in-water or water-in-oil emulsion base;
- Solid preparations such as powders, premixes or concentrates, granules, pellets, tablets, boluses, capsules; aerosols and inhalants, and active compound-containing shaped articles.

Compositions suitable for injection are prepared by dissolving the active ingredients in a suitable solvent and optionally adding further ingredients such as acids, bases, buffer salts, preservatives, and solubilizers. The solutions are filtered and filled sterile.

Suitable solvents are physiologically tolerable solvents such as water, alkanols such as ethanol, butanol, benzyl alcohol, glycerol, propylene glycol, polyethylene glycols, N-methyl-pyrrolidone, 2-pyrrolidone, and mixtures thereof.

The active compounds can optionally be dissolved in physiologically tolerable vegetable or synthetic oils which are suitable for injection.

Suitable solubilizers are solvents which promote the dissolution of the active compounds in the main solvent or prevent its precipitation. Examples are polyvinylpyrrolidone, polyvinyl alcohol, polyoxyethylated castor oil, and polyoxyethylated sorbitan ester.

Suitable preservatives are benzyl alcohol, trichlorobutanol, p-hydroxybenzoic acid esters, and n-butanol.

Oral solutions are administered directly. Concentrates are administered orally after prior dilution to the use concentration. Oral solutions and concentrates are prepared according to the state of the art and as described above for injection solutions, sterile procedures not being necessary.

Solutions for use on the skin are trickled on, spread on, rubbed in, sprinkled on or sprayed on. Solutions for use on the skin are prepared according to the state of the art and according to what is described above for injection solutions, sterile procedures not being necessary.

Further suitable solvents are polypropylene glycol, phenyl ethanol, phenoxy ethanol, ester such as ethyl or butyl acetate, benzyl benzoate, ethers such as alkyleneglycol alkylether, e.g. dipropylenglycol monomethylether, ketons such as acetone, methylethylketone, aromatic hydrocarbons, vegetable and synthetic oils, dimethylformamide, dimethylacetamide, transcutol, solketal, propylencarbonate, and mixtures thereof.

It may be advantageous to add thickeners during preparation. Suitable thickeners are inorganic thickeners such as bentonites, colloidal silicic acid, aluminium monostearate, organic thickeners such as cellulose derivatives, polyvinyl alcohols and their copolymers, acrylates and methacrylates.

Gels are applied to or spread on the skin or introduced into body cavities. Gels are prepared by treating solutions which have been prepared as described in the case of the injection solutions with sufficient thickener that a clear material having an ointment-like consistency results.

The thickeners employed are the thickeners given above.

Pour-on formulations are poured or sprayed onto limited areas of the skin, the active compounds penetrating the skin and acting systemically.

Pour-on formulations are prepared by dissolving, suspending or emulsifying the active compounds in suitable skin-compatible solvents or solvent mixtures. If appropriate, other auxiliaries such as colorants, bioabsorption-promoting substances, antioxidants, light stabilizers, adhesives are added.

Suitable solvents which are: water, alkanols, glycols, polyethylene glycols, polypropylene glycols, glycerol, aromatic alcohols such as benzyl alcohol, phenylethanol, phenoxyethanol, esters such as ethyl acetate, butyl acetate, benzyl benzoate, ethers such as alkylene glycol alkyl ethers such as dipropylene glycol monomethyl ether, diethylene glycol mono-butyl ether, ketones such as acetone, methyl ethyl ketone, cyclic carbonates such as propylene carbonate, ethylene carbonate, aromatic and/or aliphatic hydrocarbons, vegetable or synthetic oils, DMF, dimethylacetamide, N-alkylpyrrolidones such as methylpyrrolidone, N-butylpyrrolidone or N-octylpyrrolidone, N-methylpyrrolidone, 2-pyrrolidone, 2,2-dimethyl-4-oxy-methylene-1,3-dioxolane and glycerol formal.

Suitable colorants are all colorants permitted for use on animals and which can be dissolved or suspended.

Suitable absorption-promoting substances are, for example, DMSO, spreading oils such as isopropyl myristate, dipropylene glycol pelargonate, silicone oils and copolymers thereof with polyethers, fatty acid esters, triglycerides, fatty alcohols.

Suitable antioxidants are sulfites or metabisulfites such as potassium metabisulfite, ascorbic acid, butylhydroxytoluene, butylhydroxyanisole, tocopherol.

Suitable light stabilizers are, for example, novantisolic acid.

Suitable adhesives are, for example, cellulose derivatives, starch derivatives, polyacrylates, natural polymers such as alginates, gelatin.

Emulsions can be administered orally, dermally or as injections.

Emulsions are either of the water-in-oil type or of the oil-in-water type.

They are prepared by dissolving the active compounds either in the hydrophobic or in the hydrophilic phase and homogenizing this with the solvent of the other phase with the aid of suitable emulsifiers and, if appropriate, other auxiliaries such as colorants, absorption-promoting substances, preservatives, antioxidants, light stabilizers, viscosity-enhancing substances.

Suitable hydrophobic phases (oils) are:

liquid paraffins, silicone oils, natural vegetable oils such as sesame oil, almond oil, castor oil, synthetic triglycerides such as caprylic/capric biglyceride, triglyceride mixture with vegetable fatty acids of the chain length $C_8$-$C_{12}$ or other specially selected natural fatty acids, partial glyceride mixtures of saturated or unsaturated fatty acids possibly also containing hydroxyl groups, mono- and diglycerides of the $C_8$-$C_{10}$ fatty acids,

fatty acid esters such as ethyl stearate, di-n-butyryl adipate, hexyl laurate, dipropylene glycol perlargonate, esters of a branched fatty acid of medium chain length with saturated fatty alcohols of chain length $C_{16}$-$C_{18}$, isopropyl myristate, isopropyl palmitate, caprylic/capric acid esters of saturated fatty alcohols of chain length $C_{12}$-$C_{18}$, isopropyl stearate, oleyl oleate, decyl oleate, ethyl oleate, ethyl lactate, waxy fatty acid esters such as synthetic duck coccygeal gland fat, dibutyl phthalate, diisopropyl adipate, and ester mixtures related to the latter, fatty alcohols such as isotridecyl alcohol, 2-octyldodecanol, cetylstearyl alcohol, oleyl alcohol, and fatty acids such as oleic acid and mixtures thereof.

Suitable hydrophilic phases are: water, alcohols such as propylene glycol, glycerol, sorbitol and mixtures thereof.

Suitable emulsifiers are:

non-ionic surfactants, e.g. polyethoxylated castor oil, polyethoxylated sorbitan monooleate, sorbitan monostearate, glycerol monostearate, polyoxyethyl stearate, alkylphenol polyglycol ether; ampholytic surfactants such as di-sodium N-lauryl-p-iminodipropionate or lecithin;

anionic surfactants, such as sodium lauryl sulfate, fatty alcohol ether sulfates, mono/dialkyl polyglycol ether orthophosphoric acid ester monoethanolamine salt;

cation-active surfactants, such as cetyltrimethylammonium chloride.

Suitable further auxiliaries are: substances which enhance the viscosity and stabilize the emulsion, such as carboxymethylcellulose, methylcellulose and other cellulose and starch derivatives, polyacrylates, alginates, gelatin, gum arabic, polyvinylpyrrolidone, polyvinyl alcohol, copolymers of methyl vinyl ether and maleic anhydride, polyethylene glycols, waxes, colloidal silicic acid or mixtures of the substances mentioned.

Suspensions can be administered orally or topically/dermally. They are prepared by suspending the active compounds in a suspending agent, if appropriate with addition of other auxiliaries such as wetting agents, colorants, bioabsorption-promoting substances, preservatives, antioxidants, light stabilizers.

Liquid suspending agents are all homogeneous solvents and solvent mixtures.

Suitable wetting agents (dispersants) are the emulsifiers given above.

Other auxiliaries which may be mentioned are those given above.

Semi-solid preparations can be administered orally or topically/dermally. They differ from the suspensions and emulsions described above only by their higher viscosity.

For the production of solid preparations, the active compounds are mixed with suitable excipients, if appropriate with addition of auxiliaries, and brought into the desired form.

Suitable excipients are all physiologically tolerable solid inert substances. Those used are inorganic and organic substances. Inorganic substances are, for example, sodium chloride, carbonates such as calcium carbonate, hydrogencarbonates, aluminium oxides, titanium oxide, silicic acids, argillaceous earths, precipitated or colloidal silica, or phosphates. Organic substances are, for example, sugar, cellulose, foodstuffs and feeds such as milk powder, animal meal, grain meals and shreds, starches.

Suitable auxiliaries are preservatives, antioxidants, and/or colorants which have been mentioned above.

Other suitable auxiliaries are lubricants and glidants such as magnesium stearate, stearic acid, talc, bentonites, disintegration-promoting substances such as starch or crosslinked polyvinylpyrrolidone, binders such as starch, gelatin or linear polyvinylpyrrolidone, and dry binders such as microcrystalline cellulose.

In general, "parasiticidally effective amount" means the amount of active ingredient needed to achieve an observable effect on growth, including the effects of necrosis, death, retardation, prevention, and removal, destruction, or otherwise diminishing the occurrence and activity of the target organism. The parasiticidally effective amount can vary for the various compounds/compositions used in the invention. A parasiticidally effective amount of the compositions will also vary according to the prevailing conditions such as desired parasiticidal effect and duration, target species, mode of application, and the like.

The compositions which can be used in the invention can comprise generally from about 0.001 to 95 wt% of the

active compounds of the mixtures of the present invention.

Generally it is favorable to apply the active compounds of the mixtures of the present invention in total amounts of 0.5 mg/kg to 100 mg/kg per day, preferably 1 mg/kg to 50 mg/kg per day.

Ready-to-use preparations contain the active compounds of the mixtures of the present invention acting against parasites, preferably ectoparasites, in concentrations of 10 ppm to 80 per cent by weight, preferably from 0.1 to 65 per cent by weight, more preferably from 1 to 50 per cent by weight, most preferably from 5 to 40 per cent by weight.

Preparations which are diluted before use contain the active compounds of the mixtures of the present invention acting against ectoparasites in concentrations of 0.5 to 90 per cent by weight, preferably of 1 to 50 per cent by weight.

Furthermore, the preparations comprise the mixtures of the present invention against endoparasites in concentrations of 10 ppm to 2 per cent by weight, preferably of 0.05 to 0.9 per cent by weight, very particularly preferably of 0.005 to 0.25 per cent by weight.

In a preferred embodiment of the present invention, the compositions comprising the mixtures of the present invention are applied dermally / topically.

In a further preferred embodiment, the topical application is conducted in the form of compound-containing shaped articles such as collars, medallions, ear tags, bands for fixing at body parts, and adhesive strips and foils.

Generally it is favorable to apply solid formulations which release the active compounds of the mixtures of the present invention in total amounts of 10 mg/kg to 300 mg/kg, preferably 20 mg/kg to 200 mg/kg, most preferably 25 mg/kg to 160 mg/kg body weight of the treated animal in the course of three weeks.

For the preparation of the shaped articles, thermoplastic and flexible plastics as well as elastomers and thermoplastic elastomers are used. Suitable plastics and elastomers are polyvinyl resins, polyurethane, polyacrylate, epoxy resins, cellulose, cellulose derivatives, polyamides and polyester which are sufficiently compatible with the compound of formula I-1. A detailed list of plastics and elastomers as well as preparation procedures for the shaped articles is given e.g. in WO 03/086075.

Examples

The present invention is now illustrated in further details by the following examples. Synergism can be described as an interaction where the combined effect of two or more compounds is greater than the sum of the individual effects of each of the compounds. The presence of a synergistic effect in terms of percent control or efficacy, between two mixing partners (X and Y) can be calculated using the Colby equation (Colby, S. R., 1967, Calculating Synergistic and Antagonistic Responses in Herbicide Combinations, Weeds, 15, 20-22):

$$E = X + Y - \frac{XY}{100}$$

When the observed combined control effect is greater than the expected combined control effect (E), then the combined effect is synergistic.

The following tests can demonstrate the control efficacy of mixtures or compositions of this invention on specific pests and fungi. However, the pest control protection afforded by the compounds, mixtures or compositions is not limited to these species. In certain instances, combinations of a compound of this invention with other invertebrate pest control compounds or agents are found to exhibit synergistic effects against certain important invertebrate pests and/or harmful fungi.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

Biological Examples of the Invention

If not otherwise specified, the test solutions are prepared as follows:
The active compound is dissolved at the desired concentration in a mixture of 1:1 (vol:vol) distilled water : acteone. The test solution is prepared at the day of use.

Test solutions are prepared in general at concentrations of 1000 ppm, 500 ppm, 300 ppm, 100 ppm and 30 ppm (wt/vol).

Test 1

For evaluating control of vetch aphid *(Megoura viciae)* through contact or systemic means the test unit consisted

of 24-well-microtiter plates containing broad bean leaf disks. The compounds or mixtures were formulated using a solution containing 75% water and 25% DMSO. Different concentrations of formulated compounds or mixtures were sprayed onto the leaf disks at 2.5µl, using a custom built micro atomizer, at two replications. For experimental mixtures in these tests identical volumes of both mixing partners at the desired concentrations respectively, were mixed together.

After application, the leaf disks were air-dried and 5 - 8 adult aphids placed on the leaf disks inside the microtiter plate wells. The aphids were then allowed to suck on the treated leaf disks and incubated at 23 ± 1°C, 50 ± 5 % RH for 5 days. Aphid mortality and fecundity was then visually assessed.

Test 2

For evaluating control of *Caenorhabditis elegans* through contact or systemic means the test unit consisted of 96-well-microtiter plates containing a liquid diet.

The compounds or mixtures were formulated using a solution containing 75% water and 25% DMSO. Different concentrations of formulated compounds or mixtures were sprayed into the microtiter plate wells at 5µl per well, using a custom built micro atomizer, at two replications. Mixed instar 60-100 *C. elegans* were transferred into the microtiter plate wells. For experimental mixtures in these tests identical volumes of both mixing partners at the desired concentrations respectively, were mixed together.

After application, the nematodes were incubated at 18 ± 1°C, 70 ± 5 % RH for 4 days. Nematode motility (mortality) was then visually assessed.

Test 3

For evaluating control of green peach aphid (*Myzus persicae*) through systemic means the test unit consisted of 96-well-microtiter plates containing liquid artificial diet under an artificial membrane. The compounds or mixtures were formulated using a solution containing 75% water and 25% DMSO. Different concentrations of formulated compounds or mixtures were pipetted into the aphid diet, using a custom built pipetter, at two replications. For experimental mixtures in these tests identical volumes of both mixing partners at the desired concentrations respectively, were mixed together.

After application, 5 - 8 adult aphids were placed on the artificial membrane inside the microtiter plate wells. The aphids were then allowed to suck on the treated aphid diet and incubated at 23 ± 1°C, 50 ± 5 % RH for 3 days. Aphid mortality and fecundity was then visually assessed.

Test 4

For evaluating control of boll weevil *(Anthonomus grandis*) the test unit consisted of 24-well-microtiter plates containing an insect diet and 20-30 *A. grandis* eggs. The compounds or mixtures were formulated using a solution containing 75% water and 25% DMSO. Different concentrations of formulated compounds or mixtures were sprayed onto the insect diet at 20µl, using a custom built micro atomizer, at two replications. For experimental mixtures in these tests identical volumes of both mixing partners at the desired concentrations respectively, were mixed together.

After application, microtiter plates were incubated at 23 ± 1°C, 50 ± 5 % RH for 5 days. Egg and larval mortality was then visually assessed.

Test 5

For evaluating control of Mediterranean fruitfly (*Ceratitis capitata*) the test unit consisted of 96-well-microtiter plates containing an insect diet and 50-80 *C. capitata* eggs.

The compounds or mixtures were formulated using a solution containing 75% water and 25% DMSO. Different concentrations of formulated compounds or mixtures were sprayed onto the insect diet at 5µl, using a custom built micro atomizer, at two replications. For experimental mixtures in these tests identical volumes of both mixing partners at the desired concentrations respectively, were mixed together.

After application, microtiter plates were incubated at 28 ± 1°C, 80 ± 5 % RH for 5 days. Egg and larval mortality was then visually assessed.

Test 6

For evaluating control of tobacco budworm (*Heliothis virescens*) the test unit consisted of 96-well-microtiter plates containing an insect diet and 15-25 *H. virescens* eggs.

The compounds or mixtures were formulated using a solution containing 75% water and 25% DMSO. Different concentrations of formulated compounds or mixtures were sprayed onto the insect diet at 10µl, using a custom built micro

atomizer, at two replications. For experimental mixtures in these tests identical volumes of both mixing partners at the desired concentrations respectively, were mixed together.

After application, microtiter plates were incubated at 28 ± 1°C, 80 ± 5 % RH for 5 days. Egg and larval mortality was then visually assessed.

Test 7

For evaluating control of yellow fever mosquito (*Aedes aegypti*) the test unit consisted of 96-well-microtiter plates containing 200µl of tap water per well and 5-15 freshly hatched *A. aegypti* larvae.

The compounds or mixtures were formulated using a solution containing 75% water and 25% DMSO. Different concentrations of formulated compounds or mixtures were sprayed onto the insect diet at 2.5µl, using a custom built micro atomizer, at two replications. For experimental mixtures in these tests identical volumes of both mixing partners at the desired concentrations respectively, were mixed together.

After application, microtiter plates were incubated at 28 ± 1°C, 80 ± 5 % RH for 2 days. Larval mortality was then visually assessed.

Test 8

For evaluating control of Greenhouse Whitefly (*Trialeurodes vaporariorum)* the test unit consisted of 96-well-microtiter plates containing a leaf disk of egg plant leaf disk with white fly eggs. The compounds or mixtures were formulated using a solution containing 75% water and 25% DMSO. Different concentrations of formulated compounds or mixtures were sprayed onto the insect diet at 2.5µl, using a custom built micro atomizer, at two replications.

For experimental mixtures in these tests identical volumes of both mixing partners at the desired concentrations respectively, were mixed together.

After application, microtiter plates were incubated at 23 ± 1°C, 65 ± 5 % RH for 6 days. Mortality of hatched crawlers was then visually assessed.

## Claims

1. Pesticidal mixtures comprising as active components

    1) pyrazole compound A, which is 1-(1,2-dimethylpropyl)-N-ethyl-5-methyl-N-pyridazin-4-yl-pyrazole-4-carboxamide,

    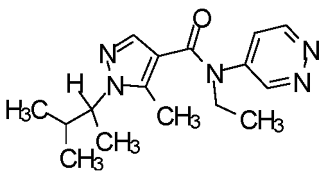

    I-1

    and

    2) one further compound B, which is 4-[(5S)-5-(3,5-dichloro-4-fluoro-phenyl)-5-(trifluoromethyl)-4H-isoxazol-3-yl]-N-[(4R)-2-ethyl-3-oxo-isoxazolidin-4-yl]-2-methyl-benzamide;

    wherein component 1) and component 2) are present in a weight ratio of from 1000:1 to 1:1000.

2. The mixture of claim 1, comprising the pyrazole compound A and the active compound B in a weight ratio of from 20:1 to 1:20.

3. A composition comprising a pesticidal mixture according to claims 1 or 2 and at least one inert liquid and/or solid carrier.

4. An agricultural composition according to claim 3 for combating animal pests comprising a pesticidal mixture according to claims 1 or 2 and at least one inert liquid and/or solid acceptable carrier and at least one surfactant.

5. A non-therapeutic method for combating or controlling invertebrate pests, which method comprises contacting said

pest or its food supply, habitat or breeding grounds with a pesticidally effective amount of a pesticidal mixture according to claims 1 or 2.

6. The method according to claim 5, wherein the pest is from the families of Pentatomidae, Cicadellidae, and Aphididae.

7. A method for protecting growing plants or plant propagation materials from attack or infestation by invertebrate pests, which method comprises contacting a plant, a plant propagation material or soil or water in which the plant is growing, with a pesticidally effective amount of a pesticidal mixture according to claims 1 or 2.

8. Plant propagation material comprising a pesticidal mixture according to claims 1 or 2 in an amount of from 0.1 g to 10 kg per 100 kg of plant propagation material.

9. A method for protection of plant propagation material comprising contacting the plant propagation material with a pesticidal mixture according to claims 1 or 2 in an amount of from 0.1 g to 10 kg per 100 kg of plant propagation material.

10. The use of a pesticidal mixture according to claims 1 or 2 for protecting growing plants or plant propagation material from attack or infestation by invertebrate pests.

11. The mixture according to claims 1 or 2 for use in a therapeutic method for combating parasites in and on animals.

## Patentansprüche

1. Pestizide Mischungen, umfassend als Wirkkomponenten

   1) Pyrazolverbindung A, bei der es sich um 1-(1,2-Dimethylpropyl)-N-ethyl-5-methyl-N-pyridazin-4-yl-pyrazol-4-carboxamid handelt,

   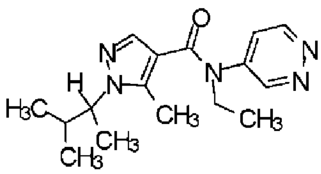

   I-1

   und

   2) eine weitere Verbindung B, bei der es sich um 4-[(5S)-5-(3,5-Dichlor-4-fluorphenyl)-5-(trifluormethyl)-4H-isoxazol-3-yl]-N-[(4R)-2-ethyl-3-oxo-isoxazolidin-4-yl]-2-methylbenzamid handelt;

   wobei Komponente 1) und Komponente 2) in einem Gewichtsverhältnis von 1000:1 bis 1:1000 vorliegen.

2. Mischung nach Anspruch 1, umfassend die Pyrazolverbindung A und den Wirkstoff B in einem Gewichtsverhältnis von 20:1 bis 1:20.

3. Zusammensetzung, umfassend eine pestizide Mischung nach Anspruch 1 oder 2 und mindestens einen inerten flüssigen und/oder festen Träger.

4. Landwirtschaftliche Zusammensetzung nach Anspruch 3 zum Bekämpfen tierischer Schädlinge, umfassend eine pestizide Mischung nach Anspruch 1 oder 2 und mindestens einen inerten flüssigen und/oder festen unbedenklichen Träger und mindestens ein Tensid.

5. Nichttherapeutisches Verfahren zum Bekämpfen oder Kontrollieren von wirbellosen Schädlingen, umfassend das Inkontaktbringen des Schädlings oder seiner Nahrungsquelle, seines Lebensraums oder seiner Brutstätten mit einer pestizid wirksamen Menge einer pestiziden Mischung nach Anspruch 1 oder 2 umfasst.

6. Verfahren nach Anspruch 5, wobei der Schädling aus den Familien Pentatomidae, Cicadellidae und Aphididae

stammt.

7. Verfahren zum Schützen von wachsenden Pflanzen oder Pflanzenvermehrungsmaterialien gegen Angriff oder Befall durch wirbellose Schädlinge, wobei das Verfahren das Inkontaktbringen einer Pflanze, eines Pflanzenfortpflanzungsmaterials oder des Bodens oder des Wassers, in dem die Pflanze wächst, mit einer pestizid wirksamen Menge einer pestiziden Mischung nach Anspruch 1 oder 2 umfasst.

8. Pflanzenfortpflanzungsmaterial, umfassend eine pestizide Mischung nach Anspruch 1 oder 2 in einer Menge von 0,1 g bis 10 kg pro 100 kg Pflanzenfortpflanzungsmaterial.

9. Verfahren zum Schützen von Pflanzenfortpflanzungsmaterial, umfassend das Inkontaktbringen des Pflanzenfortpflanzungsmaterials mit einer pestiziden Mischung nach Anspruch 1 oder 2 in einer Menge von 0,1 g bis 10 kg pro 100 kg Pflanzenfortpflanzungsmaterial.

10. Verwendung einer pestiziden Mischung nach Anspruch 1 oder 2 zum Schützen von wachsenden Pflanzen oder Pflanzenfortpflanzungsmaterial gegen Angriff oder Befall durch wirbellose Schädlinge.

11. Mischung nach Anspruch 1 oder 2 zur Verwendung bei einem therapeutischen Verfahren zum Bekämpfen von Parasiten in und auf Tieren.

**Revendications**

1. Mélanges de pesticides comprenant, comme composants actifs,

1) le composé pyrazole A, qui est le 1-(1,2-diméthylpropyl)-N-éthyl-5-méthyl-N-pyridazin-4-yl-pyrazole-4-carboxamide,

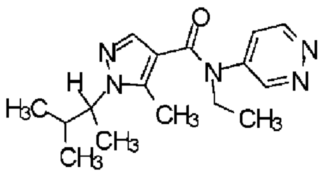

I-1

et

2) un composé supplémentaire B, qui est le 4-[(5S)-5-(3,5-dichloro-4-fluoro-phényl)-5-(trifluoro-méthyl)-4H-isoxazol-3-yl]-N-[(4R)-2-éthyl-3-oxo-isoxazolidin-4-yl]-2-méthyl-benzamide :

dans lesquels le composant 1) et le composant 2) sont présents en un rapport pondéral de 1 000:1 à 1:1 000.

2. Mélange selon la revendication 1, comprenant le composé pyrazole A et le composé actif B en un rapport pondéral de 20:1 à 1:20.

3. Composition comprenant un mélange de pesticides selon les revendications 1 ou 2 et au moins un support liquide et/ou solide inerte.

4. Composition agricole selon la revendication 3 pour la lutte contre des organismes nuisibles animaux, comprenant un mélange pesticide selon les revendications 1 ou 2 et au moins un support acceptable liquide et/ou solide inerte et au moins un tensioactif.

5. Procédé non thérapeutique pour la lutte contre ou la régulation d'organismes nuisibles invertébrés, lequel procédé comprend la mise en contact dudit organisme nuisible ou de son approvisionnement en nourriture, son habitat ou ses lieux de reproduction avec une quantité efficace sur le plan pesticide d'un mélange de pesticides selon les revendications 1 ou 2.

6. Procédé selon la revendication 5, dans lequel l'organisme nuisible appartient aux familles des Pentatomidae, Cicadellidae et Aphididae.

**7.** Procédé pour protéger des plantes en croissance ou des matériels de propagation végétale contre une attaque ou une infestation par des organismes nuisibles invertébrés, lequel procédé comprend la mise en contact d'un végétal, d'un matériel de propagation végétale ou du sol ou de l'eau dans lequel/laquelle la plante pousse, avec une quantité efficace du point de vue pesticide d'un mélange de pesticides selon les revendications 1 ou 2.

**8.** Matériel de propagation végétale comprenant un mélange de pesticides selon les revendications 1 ou 2 en une quantité allant de 0,1 g à 10 kg par 100 kg de matériel de propagation végétale.

**9.** Procédé de protection d'un matériel de propagation végétale, comprenant la mise en contact du matériel de propagation végétale avec un mélange de pesticides selon les revendications 1 ou 2 en une quantité allant de 0,1 g à 10 kg pour 100 kg de matériel de propagation végétale.

**10.** Utilisation d'un mélange de pesticides selon les revendications 1 ou 2 pour protéger des plantes en croissance ou un matériel de propagation végétale contre une attaque ou une infestation par des organismes nuisibles invertébrés.

**11.** Mélange selon les revendications 1 ou 2, destiné à être utilisé dans un procédé thérapeutique pour lutter contre des organismes nuisibles dans et sur des animaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2012143317 A
- WO 2015055497 A
- WO 2015189080 A
- WO 2016162371 A
- WO 2017055386 A
- WO 2013050302 A
- WO 2011067272 A
- WO 2013189801 A
- EP 17177575
- US 6222100 B
- WO 0182685 A
- WO 0026390 A
- WO 9741218 A
- WO 9802526 A
- WO 9802527 A
- WO 04106529 A
- WO 0520673 A
- WO 0314357 A
- WO 0313225 A
- WO 0314356 A
- WO 0416073 A
- WO 9200377 A
- EP 242236 A
- EP 242246 A
- US 5559024 A
- WO 02015701 A
- EP 374753 A
- WO 93007278 A
- WO 9534656 A
- EP 427529 A
- EP 451878 A
- WO 03018810 A
- WO 03052073 A
- EP 392225 A
- EP 257993 A
- US 5013659 A
- EP 142924 A
- EP 193259 A
- WO 9211376 A
- WO 9214827 A
- WO 9119806 A
- WO 9113972 A
- WO 03086075 A

### Non-patent literature cited in the description

- The Pesticide Manual. British Crop Protection Council, 2015
- Catalogue of pesticide formulation types and international coding system. Technical Mono-graph. CropLife International, May 2008
- **MOLLET** ; **GRUBEMANN**. Formulation technology. Wiley VCH, 2001
- New developments in crop protection product formulation. **KNOWLES**. Agrow Reports DS243. T&F Informa, 2005
- **MCCUTCHEON'S**. Emulsifiers & Detergents. McCutcheon's Directories, 2008, vol. 1
- Adjuvants and additives. **KNOWLES**. Agrow Reports DS256. T&F Informa, 2006
- **COLBY, S. R.** Calculating Synergistic and Antagonistic Responses in Herbicide Combinations. *Weeds*, 1967, vol. 15, 20-22
- **R.S. COLBY**. Calculating synergistic and antagonistic responses of herbicide combinations. *Weeds*, 1967, vol. 15, 20-22